(19) Europäisches Patentamt
European Patent Office
Office européen des brevets

(11) **EP 4 692 145 A1**

(12) **EUROPEAN PATENT APPLICATION**
published in accordance with Art. 153(4) EPC

(43) Date of publication:
**11.02.2026 Bulletin 2026/07**

(21) Application number: **24780112.9**

(22) Date of filing: **25.03.2024**

(51) International Patent Classification (IPC):
**C08F 265/02** (2006.01)    **C08L 51/06** (2006.01)

(52) Cooperative Patent Classification (CPC):
**C08F 265/02; C08L 51/06**

(86) International application number:
**PCT/JP2024/011562**

(87) International publication number:
**WO 2024/203994 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056678**

(71) Applicant: **Kaneka Corporation
Osaka-shi, Osaka 530-8288 (JP)**

(72) Inventor: **MAIZURU, Nobuyoshi
Takasago-shi, Hyogo 676-8688 (JP)**

(74) Representative: **Vossius & Partner
Patentanwälte Rechtsanwälte mbB
Siebertstraße 3
81675 München (DE)**

(54) **POLYMER MICROPARTICLES, RESIN MODIFIER, AND RESIN COMPOSITION**

(57)    An object is to provide fine polymer particles that can provide a resin composition which can provide a cured product or molded product which is excellent in elastic modulus and impact resistance. The object is attained by providing fine polymer particles containing a graft copolymer that includes a crosslinked core layer containing a polymer having a specific glass transition temperature and a shell layer grafted to the crosslinked core layer, the shell layer containing a polymer having a specific glass transition temperature, and the fine polymer particles having a volume-average particle size of 0.01 μm to 1.00 μm.

**EP 4 692 145 A1**

## Description

Technical Field

The present invention relates to fine polymer particles, a resin modifier, and a resin composition.

Background Art

Thermosetting resins have various kinds of excellent properties such as high heat resistance and high mechanical strength, and therefore are used in various fields. Meanwhile, thermosetting resins have a problem of being insufficient in impact resistance which is a characteristic of thermosetting resins. One widely used method to improve the impact resistance of a thermosetting resin is to add an elastomer to the thermosetting resin. Examples of the elastomer encompass fine polymer particles. Various particles are developed as fine polymer particles having a core-shell structure (e.g., Patent Literatures 1 and 2).

Citation List

[Patent Literature]

[Patent Literature 1]
International Publication No. WO 2019/189621
[Patent Literature 2]
Japanese Patent Application Publication Tokukai No. 2015-182248

Summary of Invention

Technical Problem

However, the above described conventional techniques have room for further improvement from the viewpoint of (i) an elastic modulus of a cured product obtained by curing a resin composition containing fine polymer particles or a molded product obtained by molding the resin composition and (ii) impact resistance of the cured product or molded product.

An aspect of the present invention is accomplished in view of the above problem, and its object is to provide fine polymer particles that can provide a resin composition which can provide a cured product or molded product which is excellent in elastic modulus and impact resistance.

Solution to Problem

The inventor of the present invention has carried out diligent study in order to attain the object, and consequently completed the present invention.

That is, fine polymer particles in accordance with an embodiment of the present invention contains a graft copolymer that includes a crosslinked core layer and a shell layer grafted to the crosslinked core layer, the crosslinked core layer containing a polymer C1 having a glass transition temperature of 75°C or higher, the shell layer containing a polymer S having a glass transition temperature of 0°C or lower, and the fine polymer particles having a volume-average particle size of 0.01 $\mu$m to 1.00 $\mu$m.

Advantageous Effects of Invention

According to an aspect of the present invention, it is possible to provide fine polymer particles that can provide a resin composition which can provide a cured product or molded product which is excellent in elastic modulus and impact resistance.

Description of Embodiments

The following description will discuss embodiments of the present invention. Note, however, that the present invention is not limited to those embodiments. The present invention is not limited to arrangements described below, but may be altered in various ways by a skilled person within the scope of the claims. The present invention also encompasses, in its technical scope, any embodiment or example derived by combining technical means disclosed in respective differing embodiments and Examples. Further, it is possible to form a new technical feature by combining the technical means disclosed in the respective embodiments. All academic and patent documents cited in the present specification are incorporated herein by reference. Any numerical range expressed as "A to B" herein is intended to mean "not less than A and not more than B (i.e., a range from A to B which includes both A and B)" unless otherwise stated.

In the present specification, a "structural unit derived from an X monomer" and a "structural unit derived from an X compound" contained in a polymer, a copolymer, or a resin may be referred to as an "X unit".

[1. Technical idea of embodiment of present invention]

As described above, the conventional techniques disclosed in Patent Literatures 1 and 2 have room for further improvement from the viewpoint of (i) an elastic modulus of a cured product obtained by curing a resin composition containing fine polymer particles or a molded product obtained by molding the resin composition and (ii) impact resistance of the cured product or molded product.

Therefore, the inventor of the present invention has conducted diligent studies for the purpose of providing fine polymer particles that can provide a resin composition which can provide a cured product or molded product which is excellent in elastic modulus and impact resistance. As a result, the inventor of the present invention has uniquely made the following novel findings, and thus completed the present invention: that is, fine polymer particles containing a graft copolymer that includes a crosslinked core layer and a shell layer grafted to the crosslinked core layer, the crosslinked core layer and the shell layer each containing a polymer having a specific glass transition temperature, the fine polymer particles having a specific volume-average particle size, can provide a resin composition which can provide a cured product or molded product which is excellent in elastic modulus and impact resistance.

[2. Fine polymer particles]

Fine polymer particles in accordance with an embodiment of the present invention contains a graft copolymer that includes a crosslinked core layer and a shell layer grafted to the crosslinked core layer, the crosslinked core layer containing a polymer C1 having a glass transition temperature of 75°C or higher, the shell layer containing a polymer S having a glass transition temperature of 0°C or lower, and the fine polymer particles having a volume-average particle size of 0.01 $\mu$m to 1.00 $\mu$m.

In the present specification, the "glass transition temperature" may be referred to as "Tg". In the present specification, "fine polymer particles in accordance with an embodiment of the present invention" may be hereinafter referred to simply as "present fine polymer particles".

The present fine polymer particles having the above described configuration has an advantage of making it possible to provide a resin composition which can provide a cured product or molded product which is excellent in elastic modulus and impact resistance.

The present fine polymer particles also have an advantage of making it possible to provide, surprisingly, a resin composition which is excellent in handleability.

In the present specification, the "elastic modulus" and "impact resistance" are evaluated based on a "flexural modulus" and "Charpy strength", respectively. It can be said that, as the flexural modulus of a cured product or molded product increases, the cured product or molded product has a more excellent elastic modulus. It can be said that, as the Charpy strength value of a cured product or molded product increases, the cured product or molded product has more excellent impact resistance. In the present specification, the "handleability" of a resin composition is evaluated based on a "viscosity" of the resin composition (e.g., a viscosity of the resin composition at 50°C). It can be said that, as the viscosity value of a resin composition at, for example, 50°C decreases, the resin composition has more excellent handleability. Methods of measuring the "flexural modulus" and "Charpy strength" of a cured product or molded product and a method of measuring the viscosity of a resin composition will be described later in detail in Examples.

(Crosslinked core layer)

The crosslinked core layer contains a polymer C1 having a glass transition temperature of 75°C or higher.

(Polymer C1)

A configuration of the polymer C1 (e.g., a type and amount of a structural unit contained in the polymer C1) is not particularly limited, as long as the Tg of the polymer C1 is 75°C or higher.

The Tg of the polymer can be determined based on, for example, a composition of structural units constituting the polymer. In other words, it is possible to adjust the Tg of a resultant polymer by changing a composition of monomers used to produce (form by polymerization) the polymer.

Note, here, that monomers each of which, when polymerized to form a homopolymer (i.e., a polymer obtained by polymerizing only one type of monomer), provides a homopolymer having a Tg of higher than 0°C will be referred to as a monomer group (a). Note also that monomers each of which, when polymerized to form a homopolymer (i.e., a polymer obtained by polymerizing only one type of monomer), provides a homopolymer having a Tg of not higher than 0°C will be referred to as a monomer group (b).

Examples of the monomers which can be included in the monomer group (a) encompass, but are not limited to, unsubstituted vinyl aromatic compounds such as styrene and 2-vinyl naphthalene; ring-alkylated vinyl aromatic compounds such as α-methylstyrene, 3-methylstyrene, 4-methylstyrene, 2,4-dimethylstyrene, 2,5-dimethylstyrene, 3,5-dimethylstyrene, and 2,4,6-trimethylstyrene; ring-alkoxylated vinyl aromatic compounds such as 4-methoxystyrene and 4-ethoxystyrene; ring-halogenated vinyl aromatic compounds such as 2-chlorostyrene and 3-chlorostyrene; ring-ester-substituted vinyl aromatic compounds such as 4-acetoxy styrene; ring-hydroxylated vinyl aromatic compounds such as 4-hydroxystyrene; vinyl esters such as vinyl benzoate and vinyl cyclohexanoate; vinyl halides such as vinyl chloride; aromatic monomers such as acenaphthalene and indene; alkyl methacrylates such as methyl methacrylate, ethyl methacrylate, and isopropyl methacrylate; aromatic methacrylates such as phenyl methacrylate; methacrylates such as isobornyl methacrylate and trimethylsilyl methacrylate; methacrylic acid derivative-containing methacryl monomers such as methacrylonitrile; certain types of acrylic acid esters such as isobornyl acrylate and tert-butyl acrylate; and acrylic acid derivative-containing acrylic monomers such as acrylonitrile. Examples of the monomers which can be included in the monomer group (a) further encompass monomers each of which, when polymerized, can provide a homopolymer having a Tg of 120°C or higher, such as acrylamide, isopropyl acrylamide, N-vinylpyrrolidone, dicyclopentanyl methacrylate, 2-methyl-2-adamanthyl methacrylate, 1-adamanthyl acrylate, and 1-adamanthyl methacrylate. These monomers in the monomer group (a) may be used alone or in combination of two or more.

Examples of the monomer group (b) encompass ethyl acrylate, butyl acrylate, 2-ethylhexyl acrylate, octyl (meth) acrylate, dodecyl (meth)acrylate, 2-hydroxyethyl acrylate, and 4-hydroxybutyl acrylate. These monomers in the monomer group (b) may be used alone or in combination of two or more. Out of the monomer group (b), ethyl acrylate, butyl acrylate, and 2-ethylhexyl acrylate are particularly preferable.

Provided that the Tg of the polymer C1 is 75°C or higher, the polymer C1 may contain a structural unit derived from at least one monomer selected from the foregoing monomer group (a) and/or a structural unit derived from at least one monomer selected from the foregoing monomer group (b). In other words, the polymer C1 can be obtained by adjusting a monomer mixture containing at least one monomer selected from the foregoing monomer group (a) and/or at least one monomer selected from the foregoing monomer group (b) so that the Tg of a resultant polymer is 75°C or higher, and polymerizing the monomer mixture.

The polymer C1 preferably contains a structural unit U1 which is derived from a monomer M1 that, when used to form a homopolymer, provides a homopolymer having a glass transition temperature of 60°C or higher. The configuration has an advantage of making it possible to obtain a cured product or molded product which exhibits a higher elastic modulus.

In the present specification, the "monomer M1 that, when used to form a homopolymer, provides a homopolymer having a glass transition temperature of 60°C or higher" can be said to be a "monomer M1 that provides a homopolymer having a glass transition temperature of 60°C or higher", and may be referred to simply as a "monomer M1".

Examples of the monomer M1, among the foregoing monomer group (a), encompass (i) unsubstituted vinyl aromatic compounds such as styrene, (ii) ring-alkylated vinyl aromatic compounds such as α-methylstyrene, 3-methylstyrene, 4-methylstyrene, 2,4-dimethylstyrene, 2,5-dimethylstyrene, 3,5-dimethylstyrene, and 2,4,6-trimethylstyrene, (iii) alkyl methacrylates such as methyl methacrylate, (iv) methacrylates such as isobornyl methacrylate, (iv) aromatic methacrylates such as phenyl methacrylate, and the like. Examples of the monomer M1 further encompass monomers that, when used to form a homopolymer, provides a homopolymer having a glass transition temperature of 120°C or higher, such as acrylamide, isopropyl acrylamide, N-vinylpyrrolidone, dicyclopentanyl methacrylate, 2-methyl-2-adamanthyl methacrylate, 1-adamanthyl acrylate, and 1-adamanthyl methacrylate.

In order to reduce excessive impregnation of the shell layer into the crosslinked core layer and consequently the fine polymer particles can provide a cured product or molded product each of which is excellent in Charpy strength (in other words, excellent in impact resistance), the monomer M1 is preferably a monomer or compound having high hydrophobicity.

In order to reduce excessive impregnation of the shell layer into the crosslinked core layer and consequently the fine polymer particles can provide a cured product or molded product each of which is excellent in Charpy strength (in other words, excellent in impact resistance), the monomer M1 (a) preferably contains at least one selected from the group consisting of unsubstituted vinyl aromatic compounds, ring-alkylated vinyl aromatic compounds, alkyl methacrylate, aromatic methacrylates (such as phenyl methacrylate), isobornyl methacrylate, dicyclopentanyl methacrylate, 2-methyl-2-adamanthyl methacrylate, 1-adamanthyl acrylate, and 1-adamanthyl methacrylate, (b) more preferably contains at least one selected from the group consisting of unsubstituted vinyl aromatic compounds, ring-alkylated vinyl aromatic compounds, aromatic methacrylate (such as phenyl methacrylate), isobornyl methacrylate, dicyclopentanyl methacrylate, 2-methyl-2-adamanthyl methacrylate, 1-adamanthyl acrylate, and 1-adamanthyl methacrylate, (c) further preferably contains at least one selected from the group consisting of unsubstituted vinyl aromatic compounds and ring-alkylated vinyl aromatic compounds, and (d) particularly preferably contains at least one selected from the group consisting of unsubstituted vinyl aromatic compounds.

In order to reduce excessive impregnation of the shell layer into the crosslinked core layer and consequently the fine polymer particles can provide a cured product or molded product each of which is excellent in Charpy strength (in other words, excellent in impact resistance), the monomer M1 (a) preferably contains at least one selected from the group consisting of styrene, $\alpha$-methylstyrene, phenyl methacrylate, isobornyl methacrylate, and dicyclopentanyl methacrylate, (b) further preferably contains styrene and/or $\alpha$-methylstyrene, and (c) particularly preferably contains styrene.

The polymer C1 contains the structural unit U1, which is derived from the monomer M1 that, when used to form a homopolymer, provides a homopolymer having a glass transition temperature of 60°C or higher, in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, in 100% by weight of the polymer C1. It is possible to bring about an advantage of making it possible to obtain a cured product or molded product having a higher elastic modulus as the contained amount of the structural unit U1 in the polymer C1 increases. The polymer C1 particularly preferably contains 100% by weight of the structural unit U1 in 100% by weight of the polymer C1. That is, the polymer C1 is particularly preferably constituted only by the structural unit U1.

The polymer C1 contains at least one structural unit U1, which is derived from at least one monomer M1 selected from the group consisting of (i) unsubstituted vinyl aromatic compounds such as styrene, (ii) ring-alkylated vinyl aromatic compounds such as $\alpha$-methylstyrene, 3-methylstyrene, 4-methylstyrene, 2,4-dimethylstyrene, 2,5-dimethylstyrene, 3,5-dimethylstyrene, and 2,4,6-trimethylstyrene, (iii) alkyl methacrylates such as methyl methacrylate, (iv) methacrylates such as isobornyl methacrylate, (iv) aromatic methacrylates such as phenyl methacrylate, and (v) monomers that each, when used to form a homopolymer, provide a homopolymer having a glass transition temperature of 120°C or higher (e.g., acrylamide, isopropyl acrylamide, N-vinylpyrrolidone, dicyclopentanyl methacrylate, 2-methyl-2-adamanthyl methacrylate, 1-adamanthyl acrylate, 1-adamanthyl methacrylate, and the like), in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, particularly preferably 100% by weight, in 100% by weight of the polymer C1. The configuration has (i) an advantage of further reducing excessive impregnation of the shell layer into the crosslinked core layer and consequently the fine polymer particles can provide a cured product or molded product each of which is further excellent in Charpy strength (in other words, further excellent in impact resistance) and (ii) an advantage of making it possible to obtain a cured product or molded product having a further higher elastic modulus.

The polymer C1 contains at least one structural unit U1, which is derived from at least one monomer M1 selected from the group consisting of styrene, $\alpha$-methylstyrene, phenyl methacrylate, isobornyl methacrylate, and dicyclopentanyl methacrylate, in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, particularly preferably 100% by weight, in 100% by weight of the polymer C1. The configuration has (i) an advantage of particularly reducing excessive impregnation of the shell layer into the crosslinked core layer and consequently the fine polymer particles can provide a cured product or molded product each of which is particularly excellent in Charpy strength (in other words, particularly excellent in impact resistance) and (ii) an advantage of making it possible to obtain a cured product or molded product having a particularly higher elastic modulus.

The glass transition temperature of the polymer C1 is preferably 76°C or higher, more preferably 77°C or higher, further preferably 78°C or higher, particularly preferably 80°C or higher. The configuration has an advantage of making it possible to obtain a cured product or molded product which is more excellent in heat resistance.

An upper limit of the glass transition temperature of the polymer C1 is not particularly limited. In order to facilitate agglutination of the fine polymer particles in an agglutination process (e.g., a first step described later) of the fine polymer particles in an aqueous latex, the glass transition temperature of the polymer C1 is preferably 150°C or lower, more preferably 120°C or lower, further preferably 110°C or lower, particularly preferably 100°C or lower.

In a case where the monomers used in the production (formation by polymerization) of the polymer C1 are known, the glass transition temperature (Tg) of the polymer C1 can be calculated according to the following FOX formula (Mathematical Formula 1):

$$1/Tg = w_1/Tg_1 + w_2/Tg_2 + \ldots + w_n/Tg_n \quad \text{(Mathematical Formula 1)}$$

where $Tg_1$, $Tg_2$, ..., $Tg_n$ are each a Tg(K) of a homopolymer of the components 1, 2, ..., n that constitute the graft part (i.e., monomers 1, 2, ..., n used in the production of the graft part), and $w_1$, $w_2$, ..., $w_n$ are each a weight fraction of the components 1, 2, ..., n that constitute the graft part (i.e., monomers 1, 2, ..., n used in the production of the graft part). In addition, the Tg of the homopolymer can be expressed with use of, for example, the numerical values provided in Polymer Handbook Fourth Edition (edited by J. Brandup et al.; John Wiley & Sons, Inc.).

In a case where a monomer used in the production (formation by polymerization) of the polymer C1 is unknown, viscoelasticity measurement (shearing method, measurement frequency: 1 Hz) can be carried out for the fine polymer particles to obtain a graph of a loss tangent (tan $\delta$), and a peak temperature in the obtained graph can be employed as a Tg. Note, here, that in a case where a plurality of peaks are found in the graph of tan $\delta$, the glass transition temperature of the polymer C1 can be determined by combination with data of other analysis such as composition analysis.

The crosslinked core layer may be a monolayer or may be a multilayer constituted by two or more crosslinked core layers.

In a case where the crosslinked core layer is a multilayer, as a preferable aspect, the crosslinked core layer preferably includes a first crosslinked core layer and a second crosslinked core layer formed on the outer side of the first crosslinked core layer. The configuration has an advantage of making it possible to obtain a cured product or molded product which is more excellent in toughness.

In the present specification, the "toughness" is evaluated based on "K1c" (fracture toughness value). It can be said that, as the K1c value of a cured product or molded product increases, the cured product or molded product has more excellent toughness. A method of measuring the "K1c" of a cured product or molded product will be described later in detail in Examples.

The crosslinked core layer may include three or more layers. The crosslinked core layer may include a first crosslinked core layer, a second crosslinked core layer formed on the outer side of the first crosslinked core layer, and a third crosslinked core layer formed on the outer side of the second crosslinked core layer.

The following description will discuss a case in which the crosslinked core layer includes a first crosslinked core layer and a second crosslinked core layer formed on the outer side of the first crosslinked core layer. In the present specification, the configuration in which a second crosslinked core layer is "formed on the outer side of the first crosslinked core layer" intends to form the second crosslinked core layer after the first crosslinked core layer is formed. It is preferable that at least a part of the second crosslinked core layer is present on the outer side of the first crosslinked core layer. The second crosslinked core layer does not necessarily need to be entirely present on the outer side of the first crosslinked core layer. In the present specification, the arrangement in which "the second crosslinked core layer is present on the outer side of the first crosslinked core layer" can be said that "the second crosslinked core layer covers the first crosslinked core layer". That is, it is preferable that at least a part of the second crosslinked core layer covers at least a part of the first crosslinked core layer. A whole of the second crosslinked core layer does not necessarily need to cover the first crosslinked core layer. A whole of the second crosslinked core layer may cover at least a part of or a whole of the first crosslinked core layer. A whole of the second crosslinked core layer may be present on the outer side of the first crosslinked core layer.

For example, in a case where, when the first crosslinked core layer and the second crosslinked core layer are obtained by emulsion polymerization, polymerization of the first crosslinked core layer is ended and subsequently the second crosslinked core layer is obtained by polymerization in the presence of the first crosslinked core layer using an aqueous latex containing the first crosslinked core layer, it is possible to obtain a crosslinked core layer which includes the first crosslinked core layer and the second core layer and in which at least a part of the second crosslinked core layer is present on the outer side of the first crosslinked core layer (in other words, at least a part of the second crosslinked core layer covers at least a part of the first crosslinked core layer).

In a case where the crosslinked core layer includes a first crosslinked core layer and a second crosslinked core layer formed on the outer side of the first crosslinked core layer, it is preferable that the first crosslinked core layer contains the polymer C1 and the second crosslinked core layer contains a polymer C2 that has a glass transition temperature of 0°C or lower. The configuration has an advantage of making it possible to obtain a cured product or molded product which is more excellent in toughness.

(Polymer C2)

A configuration of the polymer C2 (e.g., a type and amount of a structural unit contained in the polymer C2) is not particularly limited, as long as the glass transition temperature of the polymer C2 is 0°C or lower.

Provided that the Tg of the polymer C2 is 0°C or lower, the polymer C2 may contain a structural unit derived from at least one monomer selected from the foregoing monomer group (a) and/or a structural unit derived from at least one monomer selected from the foregoing monomer group (b). In other words, the polymer C2 can be obtained by adjusting a monomer mixture containing at least one monomer selected from the foregoing monomer group (a) and/or at least one monomer selected from the foregoing monomer group (b) so that the Tg of a resultant polymer is 0°C or lower, and polymerizing the monomer mixture.

The polymer C2 preferably contains a structural unit U2 which is derived from a monomer M2 that, when used to form a homopolymer, provides a homopolymer having a glass transition temperature of 0°C or lower. The configuration has an advantage of making it possible to obtain a cured product or molded product which is more excellent in toughness.

In the present specification, the "monomer M2 that, when used to form a homopolymer, provides a homopolymer having a glass transition temperature of 0°C or lower" can be said to be a "monomer M2 that provides a homopolymer having a glass transition temperature of 0°C or lower", and may be referred to simply as a "monomer M2".

Examples of the monomer M2 encompass a monomer selected from the foregoing monomer group (b).

Meanwhile, from the viewpoint of emulsion polymerizability, the polymer C2 preferably contains at least one structural unit selected from the group consisting of an aromatic vinyl unit derived from an aromatic vinyl monomer, a vinyl cyanide unit derived from a vinyl cyanide monomer, and a (meth)acrylate-based unit derived from a (meth)acrylate-based monomer.

Specific examples of the aromatic vinyl monomers encompass styrene, α-methylstyrene, p-methylstyrene, and divinylbenzene.

Specific examples of the vinyl cyanide monomers encompass acrylonitrile and methacrylonitrile.

Specific examples of the (meth)acrylate-based monomers encompass: (a) alkyl (meth)acrylates such as methyl (meth)acrylate, ethyl methacrylate, butyl methacrylate, 2-ethylhexyl methacrylate, octyl (meth)acrylate, dodecyl (meth)acrylate, stearyl (meth)acrylate, and behenyl (meth)acrylate; (b) aromatic ring-containing (meth)acrylates such as phenoxyethyl (meth)acrylate and benzyl (meth)acrylate; (c) hydroxyalkyl methacrylates such as 2-hydroxyethyl methacrylate and 4-hydroxybutyl methacrylate; (d) glycidyl (meth)acrylates such as glycidyl (meth)acrylate and glycidyl alkyl (meth)acrylate; (e) alkoxy alkyl methacrylates; (f) allyl alkyl methacrylates such as allyl methacrylate and allyl alkyl methacrylate; and (g) polyfunctional (meth)acrylates such as monoethylene glycol di(meth)acrylate, triethylene glycol di(meth)acrylate, and tetraethylene glycol di(meth)acrylate.

The structural unit U2, from among the foregoing monomer group (b), preferably contains a (meth)acrylate‘-based unit derived from a (meth)acrylate-based monomer, more preferably contains at least one selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, particularly preferably contains a butyl acrylate unit. The configuration has (i) an advantage of achieving excellent emulsion polymerizability and (ii) an advantage of making it possible to obtain a cured product or molded product which is further excellent in toughness.

The polymer C2 contains the structural unit U2 in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, in 100% by weight of the polymer C2. It is possible to bring about an advantage of making it possible to obtain a cured product or molded product having more excellent toughness as the contained amount of the structural unit U2 in the polymer C2 increases. The polymer C2 particularly preferably contains 100% by weight of the structural unit U2 in 100% by weight of the polymer C2. That is, the polymer C2 is particularly preferably constituted only by the structural unit U2.

In order to obtain a cured product or molded product which is particularly excellent in toughness, the polymer C2 contains at least one selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, particularly preferably 100% by weight, in 100% by weight of the polymer C2.

Provided that the Tg of the polymer C2 is 0°C or lower, the polymer C2 may contain a structural unit derived from a monomer other than the monomer M2. For example, the polymer C2 may contain a structural unit derived from the foregoing monomer group (a).

The following description will discuss a case (hereinafter referred to also as "case A") in which the polymer C2 contains a structural unit derived from a monomer other than the monomer M2. In the case A, the monomer other than the monomer M2 is preferably at least one monomer selected from the group consisting of an aromatic vinyl monomer, a vinyl cyanide monomer, and a (meth)acrylate-based monomer.

The polymer C2 contains at least one structural unit selected from the group consisting of an aromatic vinyl unit, a vinyl cyanide unit, and a (meth)acrylate-based unit in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, in 100% by weight of the polymer C2.

The polymer C2 contains at least one structural unit selected from the group consisting of an aromatic vinyl unit, a vinyl cyanide unit, and a (meth)acrylate-based unit in an amount of particularly preferably 100% by weight in 100% by weight of the polymer C2. That is, the polymer C2 is particularly preferably constituted only by at least one structural unit selected from the group consisting of an aromatic vinyl unit, a vinyl cyanide unit, and a (meth)acrylate-based unit.

The polymer C2 (a) more preferably contains at least one selected from the group consisting of (meth)acrylate-based units, (b) more preferably contains a butyl acrylate unit as the structural unit U2 and, as a structural unit other than the structural unit U2, at least one selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an $\alpha$-methylstyrene unit, a p-methylstyrene unit, an acrylonitrile unit, and a methacrylonitrile unit, (c) particularly preferably contains a butyl acrylate unit as the structural unit U2 and, as a structural unit other than the structural unit U2, a methyl acrylate unit. The configuration has an advantage of achieving excellent emulsion polymerizability.

The polymer C2 contains (a) a butyl acrylate unit and (b) at least one structural unit selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an $\alpha$-methylstyrene unit, a p-methylstyrene unit, an acrylonitrile unit, and a methacrylonitrile unit in a total amount of preferably 50% by weight to 100% by weight, more preferably 60% by weight to 100% by weight, more preferably 70% by weight to 100% by weight, further preferably 80% by weight to 100% by weight, particularly preferably 90% by weight to 100% by weight, in 100% by weight of the polymer C2. The configuration has an advantage of achieving further excellent emulsion polymerizability.

The glass transition temperature of the polymer C2 is 0°C or lower, preferably -5°C or lower, more preferably -10°C or lower, further preferably -15°C or lower, particularly preferably -20°C or lower. The configuration has an advantage of making it possible to obtain a cured product or molded product which is more excellent in toughness.

A lower limit of the glass transition temperature of the polymer C2 is not particularly limited. The glass transition temperature of the polymer C2 is preferably -80°C or higher, more preferably -70°C or higher, further preferably -60°C or higher, particularly preferably -50°C or higher. According to the configuration, the fine polymer particles in the aqueous latex (or the fine polymer particles in polymerization) are not agglutinated and exist in the form of primary particles. This makes it possible to bring about an advantage of improving storage stability of the aqueous latex and stability in polymerization.

In a case where the monomers used in the production (formation by polymerization) of the polymer C2 are known, the glass transition temperature (Tg) of the polymer C2 can be calculated according to the foregoing FOX formula (Mathematical Formula 1). In a case where a monomer used in the production (formation by polymerization) of the polymer C2 is unknown, viscoelasticity measurement (shearing method, measurement frequency: 1 Hz) can be carried out for the fine polymer particles to obtain a graph of a loss tangent (tan $\delta$), and a peak temperature in the obtained graph can be employed as a Tg. Note, here, that in a case where a plurality of peaks are found in the graph of tan $\delta$, the glass transition temperature of the polymer C2 can be determined by combination with data of other analysis such as composition analysis.

The following description will discuss a case in which the crosslinked core layer is a monolayer. In this case, the crosslinked core layer contains the polymer C1 in an amount of preferably 80% or more, more preferably 90% or more, further preferably 95% or more, particularly preferably 100% by weight, in 100% by weight of the crosslinked core layer. That is, in a case where the crosslinked core layer is a monolayer, the crosslinked core layer is particularly preferably constituted only by the polymer C1. In a case where the crosslinked core layer is a monolayer and the contained amount of the polymer C1 in the crosslinked core layer falls within the above described range, it is possible to bring about an advantage of making it possible to obtain a cured product or molded product having more excellent toughness.

The following description will discuss a case in which the crosslinked core layer includes a first crosslinked core layer and a second crosslinked core layer formed on the outer side of the first crosslinked core layer (hereinafter referred to also as "case B"). In the case B, the first crosslinked core layer contains the polymer C1 in an amount of preferably 80% or more, more preferably 90% or more, further preferably 95% or more, particularly preferably 100% by weight, in 100% by weight of the first crosslinked core layer. That is, in the case B, the first crosslinked core layer is particularly preferably constituted only by the polymer C1. In the case B, in a case where the contained amount of the polymer C1 in the first crosslinked core layer falls within the above described range, it is possible to bring about an advantage of making it possible to obtain a cured product or molded product having more excellent toughness. In the case B, the second crosslinked core layer contains the polymer C2 in an amount of preferably 80% or more, more preferably 90% or more, further preferably 95% or more, particularly preferably 100% by weight, in 100% by weight of the second crosslinked core layer. That is, in the case B, the second crosslinked core layer is particularly preferably constituted only by the polymer C2. In the case B, in a case where the contained amount of the polymer C2 in the second crosslinked core layer falls within the above described range, it is possible to bring about an advantage of making it possible to obtain a cured product or molded product having further excellent toughness.

The crosslinked core layer is crosslinked. Specifically, at least the polymer C1 is crosslinked.

By the crosslinking of the polymer C1, it is possible to bring about an advantage of making it possible to obtain a cured product or molded product which exhibits a higher elastic modulus.

The polymer C2 is also preferably crosslinked. The configuration has an advantage of making it possible to obtain a cured product or molded product which is more excellent in toughness.

It is possible to employ a generally used method to introduce a crosslinked structure into the polymer C1 and the polymer C2. For example, in production (formation by polymerization) of the polymer C1 and polymer C2, a crosslinking monomer(s), such as a polyfunctional monomer and/or a mercapto group-containing compound, is/are mixed with, for example, the monomer M1 and monomer M2 as monomers used, and a resultant monomer mixture is polymerized.

At least the polymer C1 includes a structural unit derived from a crosslinking monomer, that is, a crosslinking unit (e.g., a polyfunctional unit and/or a structural unit derived from a mercapto group-containing compound).

It can also be said that the polyfunctional monomer is a monomer having two or more radical-polymerizable reactive groups in an identical molecule. The radical-polymerizable reactive groups are each preferably a carbon-carbon double bond. Examples of the polyfunctional monomer exclude butadiene and include (meth)acrylates having an ethylenically unsaturated double bond(s), such as allyl alkyl (meth)acrylates and allyl oxyalkyl (meth)acrylates. Examples of a monomer having two (meth)acrylic groups encompass ethylene glycol di(meth)acrylate, butylene glycol di(meth) acrylate, butanediol di(meth)acrylate, hexanediol di(meth)acrylate, cyclohexane dimethanol di(meth)acrylate, and polyethylene glycol di(meth)acrylates. Examples of the polyethylene glycol di(meth)acrylates encompass triethylene glycol di(meth)acrylate, tripropylene glycol di(meth)acrylate, tetraethylene glycol di(meth)acrylate, and polyethylene glycol

(600) di(meth)acrylate. Examples of a monomer having three (meth)acrylic groups encompass alkoxylated trimethylolpropane tri(meth)acrylates, glycerol propoxy tri(meth)acrylate, pentaerythritol tri(meth)acrylate, and tris(2-hydroxyethyl)isocyanurate tri(meth)acrylate. Examples of the alkoxylated trimethylolpropane tri(meth)acrylates encompass trimethylolpropane tri(meth)acrylate and trimethylolpropane triethoxy tri(meth)acrylate. Examples of a monomer having four (meth)acrylic groups encompass pentaerythritol tetra(meth)acrylate and ditrimethylolpropane tetra(meth) acrylate. Examples of a monomer having five (meth)acrylic groups encompass dipentaerythritol penta(meth)acrylate. Examples of a monomer having six (meth)acrylic groups encompass ditrimethylolpropane hexa(meth)acrylate. Examples of the polyfunctional monomer also encompass diallyl phthalate, triallyl cyanurate, triallyl isocyanurate, and divinylbenzene.

Those polyfunctional monomers may be used alone or in combination of two or more.

Among the foregoing polyfunctional monomers, from the viewpoint of emulsion polymerizability, allyl methacrylate, diallyl phthalate, triallyl isocyanurate, divinylbenzene, and the like are preferably used in crosslinking of the polymer C1 and the polymer C2.

The polymer C1 preferably contains, as a crosslinking unit, at least one selected from the group consisting of an allyl methacrylate unit, a diallyl phthalate unit, a triallyl isocyanurate unit, and a divinylbenzene unit. In a case where the polymer C2 is crosslinked, the polymer C2 preferably contains, as a crosslinking unit, at least one selected from the group consisting of an allyl methacrylate unit, a diallyl phthalate unit, a triallyl isocyanurate unit, and a divinylbenzene unit.

The polymer C1 (a) preferably contains the structural unit U1 and a crosslinking unit or is constituted only by these structural units, (b) more preferably contains (b-1) at least one structural unit selected from the group consisting of a styrene unit, an α-methylstyrene unit, a phenyl methacrylate unit, an isobornyl methacrylate unit, and a dicyclopentanyl methacrylate unit and (b-2) at least one structural unit selected from the group consisting of an allyl methacrylate unit, a diallyl phthalate unit, a triallyl isocyanurate unit, and a divinylbenzene unit, or is constituted only by these structural units, (c) particularly preferably contains a styrene unit and an allyl methacrylate unit or is constituted only by these structural units.

The polymer C2 (a) preferably contains (a-1) the structural unit U2, (a-2) at least one structural unit selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an α-methylstyrene unit, a p-methylstyrene unit, an acrylonitrile unit, and a methacrylonitrile unit, and (a-3) a crosslinking unit, or is constituted only by these structural units, (b) more preferably contains (b-1) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (b-2) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, α-methylstyrene, p-methylstyrene, acrylonitrile, and methacrylonitrile, and (b-3) at least one structural unit selected from the group consisting of allyl methacrylate, diallyl phthalate, triallyl isocyanurate, and divinylbenzene, or is constituted only by these structural units, (c) particularly preferably contains a butyl acrylate unit, a methyl acrylate unit, and an allyl methacrylate unit or is constituted only by these structural units.

(Shell layer)

The graft copolymer includes a shell layer grafted to a crosslinked core layer. In a case where the crosslinked core layer includes a first crosslinked core layer and a second crosslinked core layer formed on the outer side of the first crosslinked core layer, the shell layer may be grafted to at least one of the first crosslinked core layer and the second crosslinked core layer. It is preferable that at least a part of the shell layer covers at least a part of the crosslinked core layer. A whole of the shell layer does not necessarily need to cover a whole of the entire crosslinked core layer. In a case where the crosslinked core layer includes a first crosslinked core layer and a second crosslinked core layer formed on the outer side of the first crosslinked core layer, it is preferable that at least a part of the shell layer covers at least a part of at least one of the first crosslinked core layer and the second crosslinked core layer. The shell layer may be present on an outermost layer (in other words, a surface) of the graft copolymer, or may be present on an outermost layer (in other words, a surface) of the fine polymer particles.

The shell layer contains a polymer S having a glass transition temperature of 0°C or lower.

(Polymer S)

A configuration of the polymer S (e.g., a type and amount of a structural unit contained in the polymer S) is not particularly limited, as long as the glass transition temperature of the polymer S is 0°C or lower.

Provided that the Tg of the polymer S is 0°C or lower, the polymer S may contain a structural unit derived from at least one monomer selected from the foregoing monomer group (a) and/or a structural unit derived from at least one monomer selected from the foregoing monomer group (b). In other words, the polymer S can be obtained by adjusting a monomer mixture containing at least one monomer selected from the foregoing monomer group (a) and/or at least one monomer selected from the foregoing monomer group (b) so that the Tg of a resultant polymer is 0°C or lower, and polymerizing the monomer mixture.

The polymer S preferably contains a structural unit U3 which is derived from a monomer M3 that, when used to form a homopolymer, provides a homopolymer having a glass transition temperature of 0°C or lower. The configuration has an advantage of making it possible to obtain a cured product or molded product which is more excellent in toughness.

In the present specification, the "monomer M3 that, when used to form a homopolymer, provides a homopolymer having a glass transition temperature of 0°C or lower" can be said to be a "monomer M3 that provides a homopolymer having a glass transition temperature of 0°C or lower", and may be referred to simply as a "monomer M3".

Examples of the monomer M3 encompass a monomer selected from the foregoing monomer group (b).

Meanwhile, from the viewpoint of emulsion polymerizability, the polymer S preferably contains at least one structural unit selected from the group consisting of an aromatic vinyl unit, a vinyl cyanide unit, and a (meth)acrylate-based unit.

Specific examples of the aromatic vinyl monomer, vinyl cyanide monomer, and (meth)acrylate-based monomer are the same as those described in the section (Polymer C2) above. Therefore, the description applies here, and is not repeated.

A structural unit U3, from among the foregoing monomer group (b), preferably contains a (meth)acrylate-based unit derived from a (meth)acrylate-based monomer, more preferably contains at least one selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, particularly preferably contains a butyl acrylate unit. The configuration has (i) an advantage of achieving excellent emulsion polymerizability and (ii) an advantage of making it possible to obtain a cured product or molded product which is further excellent in toughness.

The polymer S contains the structural unit U3 in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, in 100% by weight of the polymer S. It is possible to bring about an advantage of making it possible to obtain a cured product or molded product having more excellent toughness as the contained amount of the structural unit U3 in the polymer S increases. The polymer S particularly preferably contains 100% by weight of the structural unit U3 in 100% by weight of the polymer S. That is, the polymer S is particularly preferably constituted only by the structural unit U3.

In order to obtain a cured product or molded product which is particularly excellent in toughness, the polymer S contains at least one selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, particularly preferably 100% by weight, in 100% by weight of the polymer S.

Provided that the Tg of the polymer S is 0°C or lower, the polymer S may contain a structural unit derived from a monomer other than the monomer M3. For example, the polymer S may contain a structural unit derived from the foregoing monomer group (a).

The following description will discuss a case (hereinafter referred to also as "case C") in which the polymer S contains a structural unit derived from a monomer other than the monomer M3. In the case C, the monomer other than the monomer M3 is preferably at least one monomer selected from the group consisting of an aromatic vinyl monomer, a vinyl cyanide monomer, and a (meth)acrylate-based monomer.

The polymer S contains at least one structural unit selected from the group consisting of an aromatic vinyl unit, a vinyl cyanide unit, and a (meth)acrylate-based unit in an amount of preferably 50% by weight to 100% by weight, more preferably 60% by weight to 100% by weight, more preferably 70% by weight to 100% by weight, further preferably 80% by weight to 100% by weight, furthermore preferably 90% by weight to 100% by weight, in 100% by weight of the polymer S. The polymer S contains at least one structural unit selected from the group consisting of an aromatic vinyl unit, a vinyl cyanide unit, and a (meth)acrylate-based unit in an amount of particularly preferably 100% by weight in 100% by weight of the polymer S. That is, the polymer S is particularly preferably constituted only by at least one structural unit selected from the group consisting of an aromatic vinyl unit, a vinyl cyanide unit, and a (meth)acrylate-based unit.

The polymer S (a) more preferably contains at least one selected from the group consisting of (meth)acrylate-based units, (b) more preferably contains a butyl acrylate unit as the structural unit U3 and, as a structural unit other than the structural unit U3, at least one structural unit selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an α-methylstyrene unit, a p-methylstyrene unit, an acrylonitrile unit, and a methacrylonitrile unit, (c) particularly preferably contains a butyl acrylate unit as the structural unit U3 and, as a structural unit other than the structural unit U3, a methyl acrylate unit. The configuration has an advantage of achieving excellent emulsion polymerizability.

The polymer S contains (a) a butyl acrylate unit and (b) at least one structural unit selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an α-methylstyrene unit, a p-methylstyrene unit, an acrylonitrile unit, and a methacrylonitrile unit in a total amount of preferably 50% by weight to 100% by weight, more preferably 60% by weight to 100% by weight, more preferably 70% by weight to 100% by weight, further preferably 80% by weight to 100% by weight, particularly preferably 90% by weight to 100% by weight, in 100% by weight of the polymer S. The configuration has an advantage of achieving further excellent emulsion polymerizability.

The glass transition temperature of the polymer S is 0°C or lower, preferably -5°C or lower, more preferably -10°C or lower, further preferably -15°C or lower, particularly preferably -20°C or lower. The configuration has an advantage of making it possible to obtain a cured product or molded product which is more excellent in toughness.

A lower limit of the glass transition temperature of the polymer S is not particularly limited. The glass transition temperature of the polymer S is preferably -80°C or higher, more preferably -70°C or higher, further preferably -60°C or higher, particularly preferably -50°C or higher. According to the configuration, the fine polymer particles in the aqueous latex (or the fine polymer particles in polymerization) are not agglutinated and exist in the form of primary particles. This makes it possible to bring about an advantage of improving storage stability of the aqueous latex and stability in polymerization.

In a case where the monomers used in the production (formation by polymerization) of the polymer S are known, the glass transition temperature (Tg) of the polymer S can be calculated according to the foregoing FOX formula (Mathematical Formula 1). In a case where a monomer used in the production (formation by polymerization) of the polymer S is unknown, viscoelasticity measurement (shearing method, measurement frequency: 1 Hz) can be carried out for the fine polymer particles to obtain a graph of a loss tangent (tan δ), and a peak temperature in the obtained graph can be employed as a Tg. Note, here, that in a case where a plurality of peaks are found in the graph of tan δ, the glass transition temperature of the polymer S can be determined by combination with data of other analysis such as composition analysis.

The shell layer contains the polymer S in an amount of preferably 80% or more, more preferably 90% or more, further preferably 95% or more, particularly preferably 100% by weight, in 100% by weight of the shell layer. That is, the shell layer is particularly preferably constituted only by the polymer S. In a case where the contained amount of the polymer S in the shell layer falls within the above described range, it is possible to bring about an advantage of making it possible to obtain a cured product or molded product having more excellent toughness.

The shell layer may contain a polymer other than the polymer S.

The shell layer preferably contains an epoxy group-containing structural unit. With the above feature, it is possible to chemically bond (i) the shell layer of the fine polymer particles and (ii) the matrix resin in the resin composition. Thus, in the resin composition or in a cured product or molded product obtained from the resin composition, it is possible to maintain a favorable state of dispersion of the fine polymer particles without causing the fine polymer particles to agglutinate.

In order to obtain a shell layer that contains an epoxy group-containing structural unit, it is possible to use, in the production (e.g., formation of the polymer S by polymerization) of the shell layer, an epoxy group-containing monomer. Specific examples of the epoxy group-containing monomer encompass glycidyl-group-containing vinyl monomers such as glycidyl (meth)acrylates, 4-hydroxybutyl (meth)acrylate glycidyl ethers, and allyl glycidyl ethers. The term "(meth)acrylate" herein is intended to mean acrylate and/or methacrylate.

These epoxy group-containing monomers may be used alone or in combination of two or more.

The shell layer contains an epoxy group-containing structural unit in an amount of preferably more than 0% by weight and not more than 50% by weight, more preferably 1% by weight to 40% by weight, further preferably 3% by weight to 30% by weight, particularly preferably 3% by weight to 20% by weight, and most preferably 3% by weight to 16% by weight, in 100% by weight of the shell layer. (a) In a case where the shell layer contains the structural unit derived from an epoxy group-containing monomer in an amount of more than 0% by weight in 100% by weight of the shell layer, a resin composition obtained can provide a cured product or molded product which has sufficient impact resistance. (b) In a case where the shell layer contains the structural unit derived from an epoxy group-containing monomer in an amount of not more than 50% by weight in 100% by weight of the shell layer, a resin composition obtained has advantages that (i) the resin composition can provide a cured product or molded product which has sufficient impact resistance and (ii) the resin composition has favorable storage stability.

The epoxy group-containing structural unit is preferably contained in the polymer S. In other words, the polymer S preferably contains an epoxy group-containing structural unit. The configuration has an advantage of achieving favorable dispersibility of the fine polymer particles.

The polymer S contains an epoxy group-containing structural unit in an amount of preferably more than 0% by weight and not more than 50% by weight, more preferably 1% by weight to 40% by weight, further preferably 3% by weight to 30% by weight, particularly preferably 3% by weight to 20% by weight, and most preferably 3% by weight to 16% by weight, in 100% by weight of the polymer S. (a) In a case where the polymer S contains the structural unit derived from an epoxy group-containing monomer in an amount of more than 0% by weight in 100% by weight of the polymer S, a resin composition obtained can provide a cured product or molded product which has sufficient impact resistance. (b) In a case where the polymer S contains the structural unit derived from the epoxy group-containing monomer in an amount of not more than 50% by weight in 100% by weight of the polymer S, a resin composition obtained has advantages that (i) the resin composition can provide a cured product or molded product which has sufficient impact resistance and (ii) the resin composition has favorable storage stability.

The shell layer is preferably not crosslinked, in other words, preferably non-crosslinked.

The contained amount of a crosslinking monomer(s) such as a polyfunctional monomer and/or a mercapto group-containing compound in the shell layer is preferably as small as possible. For example, the contained amount is preferably not more than 5.0% by weight, more preferably not more than 3.0% by weight, further preferably not more than 1.0% by weight, particularly preferably not more than 0.1% by weight, in 100% by weight of the shell layer.

The polymer S is preferably not crosslinked, in other words, preferably non-crosslinked.

The contained amount of a crosslinking monomer(s) such as a polyfunctional monomer and/or a mercapto group-containing compound in the polymer S is preferably as small as possible. For example, the contained amount is preferably not more than 5.0% by weight, more preferably not more than 3.0% by weight, further preferably not more than 1.0% by weight, particularly preferably not more than 0.1% by weight, in 100% by weight of the polymer S.

The polymer S (a) preferably contains (a-1) the structural unit U3, (a-2) at least one structural unit selected from the group consisting of a methyl (meth)acrylate unit, an ethyl methacrylate unit, a butyl methacrylate unit, a 2-ethylhexyl methacrylate unit, an octyl (meth)acrylate unit, a dodecyl (meth)acrylate unit, a stearyl (meth)acrylate unit, a phenoxyethyl (meth)acrylate unit, a benzyl (meth)acrylate unit, a styrene unit, an $\alpha$-methylstyrene unit, a p-methylstyrene unit, an acrylonitrile unit, and a methacrylonitrile unit, and (a-3) a glycidyl group-containing vinyl unit, or is constituted only by these structural units, (b) more preferably contains (b-1) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (b-2) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, $\alpha$-methylstyrene, p-methylstyrene, acrylonitrile, and methacrylonitrile, and (b-3) at least one structural unit selected from the group consisting of glycidyl (meth)acrylate, 4-hydroxybutyl (meth)acrylate glycidyl ether, and allyl glycidyl ether or is constituted only by these structural units, (c) particularly preferably contains a butyl acrylate unit, a methyl acrylate unit, and a glycidyl methacrylate unit or is constituted only by these structural units.

Proportions of the crosslinked core layer and the shell layer in the graft copolymer are as follows, with respect to 100% by weight of the graft copolymer. Preferably, the crosslinked core layer is in an amount of 30% by weight to 90% by weight and the shell layer is in an amount of 10% by weight to 70% by weight. More preferably, the crosslinked core layer is in an amount of 35% by weight to 90% by weight and the shell layer is in an amount of 10% by weight to 65% by weight. Further preferably, the crosslinked core layer is in an amount of 40% by weight to 85% by weight and the shell layer is in an amount of 15% by weight to 60% by weight. Particularly preferably, the crosslinked core layer is in an amount of 45% by weight to 85% by weight and the shell layer is in an amount of 15% by weight to 55% by weight. Most preferably, the crosslinked core layer is in an amount of 50% by weight to 80% by weight and the shell layer is in an amount of 20% by weight to 50% by weight.

The fine polymer particles may be constituted only by a graft copolymer.

(Volume-average particle size (Mv) of fine polymer particles)

A volume-average particle size of the present fine polymer particles is 0.01 $\mu$m to 1.00 $\mu$m. The configuration has an advantage of making it possible to obtain a cured product or molded product which is more excellent in toughness. The volume-average particle size of the present fine polymer particles is preferably 0.05 $\mu$m to 0.80 $\mu$m, more preferably 0.10 $\mu$m to 0.60 $\mu$m, further preferably 0.13 $\mu$m to 0.40 $\mu$m, particularly preferably 0.15 $\mu$m to 0.30 $\mu$m. A method of measuring the volume-average particle size of the fine polymer particles will be described later in detail in Examples.

(Method of producing fine polymer particles (graft copolymer))

The fine polymer particles (graft copolymer) can be produced by a known method, for example, a method such as an emulsion polymerization method, a suspension polymerization method, or a microsuspension polymerization method. Specifically, formation of the crosslinked core layer (e.g., the polymer C1 and optionally the polymer C2) by polymerization and formation of a polymer (e.g., the polymer S) constituting the shell layer by graft polymerization can be each achieved by a known method (e.g., a method such as an emulsion polymerization method, a suspension polymerization method, or a microsuspension polymerization method). Out of these methods, the emulsion polymerization method is particularly preferable as the method of producing the fine polymer particles (graft copolymer). The emulsion polymerization method has the following advantages: it facilitates (a) compositional design of the fine polymer particles (graft copolymer), (b) industrial production of the fine polymer particles (graft copolymer), and (c) obtainment of a latex containing the fine polymer particles (graft copolymer) which can be suitably used to produce the present resin composition. As the method of obtaining the fine polymer particles with an emulsion polymerization method, a method disclosed in, for example, International Publication No. WO 2005/028546 can be used.

For example, the fine polymer particles (graft copolymer) can be produced as follows: after a crosslinked core layer (e.g., a polymer C1 and optionally a polymer C2) is formed by polymerization, a polymer (e.g., a polymer S) constituting a shell layer is formed by graft polymerization in the presence of the crosslinked core layer. The crosslinked core layer including a first crosslinked core layer and a second crosslinked core layer formed on the outer side of the first crosslinked core layer can be produced by forming the first crosslinked core layer by polymerization and then forming a polymer constituting the second crosslinked core layer by polymerization in the presence of the first crosslinked core layer. For example, a polymer C1 is formed by polymerization, and then a polymer C2 is formed by polymerization in the presence of the polymer C1. Thus, it is possible to obtain a crosslinked core layer including a first crosslinked core layer and a second crosslinked core layer formed on the outer side of the first crosslinked core layer.

In the production of the fine polymer particles, a known polymerization initiator can be used. In the production of the fine polymer particles, a known surfactant can be used. In a case where the production of the fine polymer particles is carried out by emulsion polymerization, a known emulsifying agent can be used.

In the production of the fine polymer particles, conditions of polymerization such as polymerization temperature, pressure, and deoxygenation can be conditions within known numerical ranges.

[3. Resin modifier]

The resin modifier in accordance with an embodiment of the present invention contains the fine polymer particles described in the section [2. Fine polymer particles] above.

In the present specification, the "resin modifier in accordance with an embodiment of the present invention" may be hereinafter referred to simply as a "present modifier".

The present modifier having the above described configuration has an advantage that a resin composition obtained by mixing the modifier and a thermosetting resin can provide a cured product or molded product which is excellent in elastic modulus and impact resistance. The present modifier further has an advantage that a resin composition obtained by mixing the modifier and a thermosetting resin is excellent in handleability.

A thermosetting resin with which the present modifier is to be mixed will be described in the section (Matrix resin) below.

The present modifier may contain, as an additive other than the fine polymer particles, any of, for example, inorganic fillers; organic fillers; anti-blocking agents; curing agents; coloring agents such as pigments and colorants; extenders; ultraviolet ray absorbing agents; antioxidants; heat stabilizers (antigelling agents); plasticizing agents; leveling agents; defoaming agents; silane coupling agents; antistatic agents; flame retardants; lubricants; viscosity reducers; shrinkage reducing agents; desiccants; and dispersion agents.

(Method of producing resin modifier)

The fine polymer particles themselves obtained with the method described in the section (Method of producing fine polymer particles (graft copolymer)) above can be used as a resin modifier. For example, the aqueous latex containing the fine polymer particles obtained with the method described in the section (Method of producing fine polymer particles) above can be used as a resin modifier. Alternatively, an aqueous latex obtained by adding the foregoing additive to the aqueous latex containing the fine polymer particles can be used as a resin modifier.

[4. Resin composition]

A resin composition in accordance with an embodiment of the present invention contains the fine polymer particles described in the section [2. Fine polymer particles] above and a matrix resin, and an amount of the fine polymer particles is 15% by weight to 50% by weight and an amount of the matrix resin is 50% by weight to 85% by weight, with respect to a total of 100% by weight of the fine polymer particles and the matrix resin.

Alternatively, a resin composition in accordance with an embodiment of the present invention contains the resin modifier described in the section [3. Resin modifier] above and a matrix resin, and an amount of the fine polymer particles is 15% by weight to 50% by weight and an amount of the matrix resin is 50% by weight to 85% by weight, with respect to a total of 100% by weight of the fine polymer particles and the matrix resin.

In the present specification, a "resin composition in accordance with an embodiment of the present invention" may be hereinafter referred to simply as a "present resin composition".

The present resin composition having the above described configuration has an advantage that the resin composition can provide a cured product or molded product which is excellent in elastic modulus and impact resistance. The present resin composition further has an advantage of excellent handleability.

(Matrix resin)

The matrix resin is not particularly limited, and is preferably a thermosetting resin because a cured product can be obtained which is excellent in balance between an elastic modulus and strength.

The thermosetting resin preferably includes at least one type of thermosetting resin selected from the group consisting of: resins each containing a polymer obtained by polymerization of an ethylenically unsaturated monomer; epoxy resins; epoxidized fats; phenolic resins; polyol resins; and amino-formaldehyde resins (melamine resins). Examples of the thermosetting resin also encompass resins each containing a polymer obtained by polymerization of an aromatic polyester raw material. These thermosetting resins may be used alone or in combination of two or more.

(Epoxy resin)

The epoxy resin is not particularly limited, provided that the epoxy resin contains at least one epoxy bond per molecule.

Specific examples of the epoxy resin encompass bisphenol A epoxy resin, bisphenol F epoxy resin, bisphenol AD epoxy resin, bisphenol S epoxy resin, glycidyl ester type epoxy resin, glycidyl amine type epoxy resin, novolac type epoxy resin, glycidyl ether epoxy resin of bisphenol A propylene oxide adduct, hydrogenated bisphenol A (or F) epoxy resin, fluorinated epoxy resin, rubber-modified epoxy resin containing polybutadiene or NBR, flame-resistant epoxy resin such as glycidyl ether of tetrabromo bisphenol A, p-oxybenzoic acid glycidyl ether ester type epoxy resin, m-aminophenol type epoxy resin, diaminodiphenylmethanebased epoxy resin, urethane-modified epoxy resin containing urethane bond, various types of alicyclic epoxy resin, glycidyl ether of a polyhydric alcohol, hydantoin-type epoxy resin, epoxidized unsaturated polymer such as petroleum resin, and amino-containing glycidyl ether resin. Examples of the polyhydric alcohol encompass N,N-diglycidyl aniline, N,N-diglycidyl-o-toluidine, triglycidyl isocyanurate, polyalkylene glycol diglycidyl ether, and glycerin. Other examples of the epoxy resin encompass an epoxy compound obtained by causing an addition reaction between one of the above epoxy resins and e.g., a bisphenol A (or F) or a polybasic acid. The epoxy resins are not limited to these examples, and a generally used epoxy resin can be used. These epoxy resins may be used alone or in combination of two or more.

Out of these epoxy resins, epoxy resins each of which has at least two epoxy groups in one molecule are preferable in that, e.g., such resins have high reactivity during curing of the resin composition and make it easy for an obtained cured product to create a three-dimensional mesh. In addition, out of the epoxy resins each of which has at least two epoxy groups in one molecule, epoxy resins each of which contains a bisphenol type epoxy resin as a main component are preferable, because they are economical and easily available.

Examples of the epoxidized fat encompass epoxidized soybean oil and epoxidized linseed oil. These epoxidized fats may be used alone or in combination of two or more.

In order to obtain a cured product which is excellent in balance between an elastic modulus and strength, the matrix resin is particularly preferably an epoxy resin.

(Proportions of fine polymer particles and matrix resin)

Proportions of the fine polymer particles and the matrix resin in the present resin composition are as follows, with respect to a total amount of 100% by weight of the fine polymer particles and the matrix resin. (a) Preferably, the fine polymer particles are in an amount of 15% by weight to 50% by weight and the matrix resin is in an amount of 50% by weight to 85% by weight. (b) More preferably, the fine polymer particles are in an amount of 15% by weight to 45% by weight and the matrix resin is in an amount of 55% by weight to 85% by weight. (c) More preferably, the fine polymer particles are in an amount of 17% by weight to 40% by weight and the matrix resin is in an amount of 60% by weight to 83% by weight. (d) Further preferably, the fine polymer particles are in an amount of 20% by weight to 30% by weight and the matrix resin is in an amount of 70% by weight to 80% by weight. (e) Particularly preferably the fine polymer particles are in an amount of 23% by weight to 27% by weight and the matrix resin is in an amount of 73% by weight to 77% by weight. In a case where the amount of the fine polymer particles is not less than 15% by weight with respect to the total amount of 100% by weight of the fine polymer particles and the matrix resin, it is possible to bring about an advantage of making it possible to obtain a cured product or molded product which is more excellent in toughness. In a case where the amount of the fine polymer particles is not more than 50% by weight with respect to the total amount of 100% by weight of the fine polymer particles and the matrix resin, it is possible to bring about an advantage that the resin composition has a low viscosity. The resin composition in which the amount of the fine polymer particles is not less than 15% by weight with respect to the total amount of 100% by weight of the fine polymer particles and the matrix resin can be said to be a master batch.

Proportions of the fine polymer particles and the matrix resin in the present resin composition may be as follows, with respect to a total amount of 100% by weight of the fine polymer particles and the matrix resin. (a) The fine polymer particles may be in an amount of 15% by weight to 50% by weight and the matrix resin may be in an amount of 50% by weight to 85% by weight, (b) the fine polymer particles may be in an amount of 17% by weight to 50% by weight and the matrix resin may be in an amount of 50% by weight to 83% by weight, (c) the fine polymer particles may be in an amount of 20% by weight to 50% by weight and the matrix resin may be in an amount of 50% by weight to 80% by weight, (d) the fine polymer particles may be in an amount of 23% by weight to 50% by weight and the matrix resin may be in an amount of 50% by weight to 77% by weight, (e) the fine polymer particles may be in an amount of 25% by weight to 50% by weight and the matrix resin may be in an amount of 50% by weight to 75% by weight.

(Other optional components)

The present resin composition may contain, as necessary, other optional component(s) which is different from the above-described components. Examples of other optional components encompass: inorganic fillers; organic fillers; anti-blocking agents; curing agents; coloring agents such as pigments and colorants; extenders; ultraviolet ray absorbing agents; antioxidants; heat stabilizers (antigelling agents); plasticizing agents; leveling agents; defoaming agents; silane coupling agents; antistatic agents; flame retardants; lubricants; viscosity reducers; shrinkage reducing agents; desiccants; and dispersion agents.

Other optional components can be added during any step in a method of producing the present resin composition. For example, other optional components may be added to an aqueous latex or mixture in a first step described in (Method of producing resin composition) below, or may be added to an agglutinate of collected fine polymer particles in a second step. Other optional components can be added to the present resin composition.

(Physical properties of resin composition)

The present resin composition has a low viscosity, and therefore has an advantage of excellent handleability. The viscosity of the present resin composition at 50°C is preferably less than 10,000 mPa·s, more preferably 9,000 mPa·s or less, more preferably 8,000 mPa·s or less, more preferably 7,000 mPa·s or less, further preferably 6,000 mPa·s or less, particularly preferably 5,000 mPa·s or less. The "viscosity of the resin composition at 50°C" can be said to be a "viscosity of the resin composition having a temperature of 50°C".

The viscosity of the present resin composition at 50°C may be 4,800 mPa·s or less, may be 4,600 mPa·s or less, may be 4,400 mPa·s or less, may be 4,200 mPa·s or less, may be 4,000 mPa·s or less.

A lower limit of the viscosity of the present resin composition at 50°C is not particularly limited. From the viewpoint of handleability, the viscosity is preferably 100 mPa·s or more, more preferably 200 mPa·s or more, further preferably 300 mPa·s or more, particularly preferably 500 mPa·s or more.

(Method of producing resin composition)

The present resin composition is preferably arranged so that the fine polymer particles are dispersed in the form of primary particles in the matrix resin. Various methods can be used as a method of obtaining a composition in which the fine polymer particles are dispersed in the form of primary particles in the matrix resin (i.e., a method of producing the present resin composition). Examples of the method of producing the present resin composition encompass (i) a method in which fine polymer particles obtained in the form of an aqueous latex are brought into contact with a matrix resin and then an unnecessary component such as water is removed and (ii) a method in which fine polymer particles obtained in the form of an aqueous latex are extracted into an organic solvent once and then the resultant organic solvent solution of the fine polymer particles is mixed with a matrix resin, and then the organic solvent is removed. A method disclosed in PCT International Publication No. WO 2005/028546 is preferably used as the method of producing the present resin composition. The specific method of producing the present resin composition includes the following steps in order: (i) a first step of mixing an aqueous latex containing fine polymer particles (specifically, a reaction mixture obtained by producing the fine polymer particles by emulsion polymerization) with an organic solvent having a water solubility of 5% by weight to 40% by weight at 20°C and then an excess amount of water is added to and mixed with the resultant mixture so as to agglutinate the fine polymer particles, (ii) a second step of separating and collecting the agglutinated fine polymer particles from the mixture (liquid phase) and then once again mixing the collected fine polymer particles with an organic solvent so as to obtain an organic solvent solution of the fine polymer particles, and (iii) a third step of mixing the resultant organic solvent solution with the matrix resin and then distilling off the organic solvent. The present resin composition is preferably prepared through a production method including the first step, the second step, and the third step which are described above.

[Cured product]

A cured product obtained by curing the present resin composition and a cured product obtained by curing a composition obtained by mixing the present modifier with a thermosetting resin are also an embodiment of the present invention.

The cured product in accordance with an embodiment of the present invention is a cured product obtained by curing the present resin composition or a cured product obtained by curing a composition obtained by mixing the present modifier with a thermosetting resin. Therefore, the cured product has an advantage of an excellent elastic modulus and excellent impact resistance. The cured product in accordance with an embodiment of the present invention also has an advantage of excellent toughness.

[Applications]

The present fine polymer particles, the present modifier, the present resin composition, and the cured product in accordance with an embodiment of the present invention can be used in various applications, and the applications are not limited to any particular ones. The present fine polymer particles, the present modifier, the present resin composition, and the cured product in accordance with an embodiment of the present invention are each preferably used in applications such as, for example, adhesive agents, coating materials, binders for reinforcement fibers, composite materials, molding materials for 3D printers, sealants, electronic substrates, ink binders, wood chip binders, binders for rubber chips, foam chip binders, binders for castings, rock mass consolidation materials for floor materials and ceramics, and urethane foams.

The present fine polymer particles, the present modifier, the present resin composition, and the cured product in accordance with an embodiment of the present invention are particularly preferably used in a composite material that is used in production of an aircraft, and the like, among the above described applications.

An embodiment of the present invention provides a composite material that contains the present resin composition.

An embodiment of the present invention encompasses the following features.

<1> Fine polymer particles including a graft copolymer that includes a crosslinked core layer and a shell layer grafted to the crosslinked core layer, the crosslinked core layer containing a polymer C1 having a glass transition temperature of 75°C or higher, the shell layer containing a polymer S having a glass transition temperature of 0°C or lower, and the fine polymer particles having a volume-average particle size of 0.01 μm to 1.00 μm.

<2> The fine polymer particles described in <1>, in which: the polymer C1 contains 50% by weight to 100% by weight of a structural unit U1, which is derived from a monomer M1, in 100% by weight of the polymer C1, the monomer M1, when used to form a homopolymer, providing a homopolymer having a glass transition temperature of 60°C or higher.

<3> The fine polymer particles described in <1> or <2>, in which: the polymer S contains at least one structural unit selected from the group consisting of an aromatic vinyl unit, a vinyl cyanide unit, and a (meth)acrylate-based unit.

<4> The fine polymer particles described in any one of <1> through <3>, in which: the crosslinked core layer includes a first crosslinked core layer and a second crosslinked core layer which is formed on the outer side of the first crosslinked core layer.

<5> The fine polymer particles described in <4>, in which: the first crosslinked core layer contains the polymer C1; and the second crosslinked core layer contains a polymer C2 having a glass transition temperature of 0°C or lower.

<6> The fine polymer particles described in any one of <1> through <5>, in which: the shell layer contains an epoxy group-containing structural unit in an amount of more than 0% by weight and not more than 50% by weight in 100% by weight of the shell layer.

<7> The fine polymer particles described in any one of <1> through <6>, in which: a glass transition temperature of the polymer C1 is 150°C or lower.

<8> The fine polymer particles described in any one of <1> through <7>, in which: the polymer C1 contains (i) at least one structural unit selected from the group consisting of a styrene unit, an $\alpha$-methylstyrene unit, a phenyl methacrylate unit, an isobornyl methacrylate unit, and a dicyclopentanyl methacrylate unit and (ii) at least one structural unit selected from the group consisting of an allyl methacrylate unit, a diallyl phthalate unit, a triallyl isocyanurate unit, and a divinylbenzene unit.

<9> The fine polymer particles described in <5>, in which: a glass transition temperature of the polymer C2 is -80°C or higher.

<10> The fine polymer particles described in <5> or <9>, in which: the polymer C2 contains 50% by weight to 100% by weight of a structural unit U2, which is derived from a monomer M2, in 100% by weight of the polymer C2, the monomer M2, when used to form a homopolymer, providing a homopolymer having a glass transition temperature of 0°C or lower.

<11> The fine polymer particles described in any one of claims <5>, <9>, and <10>, in which: the polymer C2 contains (i) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (ii) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, $\alpha$-methylstyrene, p-methylstyrene, acrylonitrile, and methacrylonitrile, and (iii) at least one structural unit selected from the group consisting of allyl methacrylate, diallyl phthalate, triallyl isocyanurate, and divinylbenzene.

<12> The fine polymer particles described in any one of <1> through <11>, in which: a glass transition temperature of the polymer S is -80°C or higher.

<13> The fine polymer particles described in any one of <1> through <12>, in which: the polymer S contains 50% by weight to 100% by weight of a structural unit U3, which is derived from a monomer M3, in 100% by weight of the polymer S, the monomer M3, when used to form a homopolymer, providing a homopolymer having a glass transition temperature of 0°C or lower.

<14> The fine polymer particles described in any one of <1> through <13>, in which: the polymer S contains (i) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (ii) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, $\alpha$-methylstyrene, p-methylstyr-ene, acrylonitrile, and methacrylonitrile, and (iii) at least one structural unit selected from the group consisting of glycidyl (meth)acrylate, 4-hydroxybutyl (meth)acrylate glycidyl ether, and allyl glycidyl ether.

<15> A resin modifier containing fine polymer particles described in any one of <1> through <14>.

<16> A resin composition including: fine polymer particles described in any one of <1> through <14> or a resin modifier described in <8>; and a matrix resin, an amount of the fine polymer particles being 15% by weight to 50% by weight and an amount of the matrix resin being 50% by weight to 85% by weight with respect to a total of 100% by weight of the fine polymer particles and the matrix resin.

<17> The resin composition described in <16>, in which: the matrix resin is a thermosetting resin.

<18> The resin composition described in <16> or <17>, in which: the matrix resin is an epoxy resin.

<19> The resin composition described in any one of <16> through <18>, in which: the amount of the fine polymer particles is 20% by weight to 50% by weight with respect to the total of 100% by weight of the fine polymer particles and the matrix resin; and the resin composition has a viscosity at 50°C of 8,000 mPa·s or less.

<20> A composite material containing the resin composition described in any one of <16> through <19>. Examples

The following description will discuss an embodiment of the present invention in detail with reference to Examples and Comparative Examples. Note that the present invention is not limited to these examples. An embodiment of the present invention can be altered as appropriate within the scope of the gist disclosed herein. The present invention also includes, in its technical scope, embodiments achieved by altering the embodiment.

[Evaluation Methods]

First, the following description will discuss methods of evaluating the resin compositions produced in the Examples and Comparative Examples.

<Measurement of volume-average particle size>

The volume-average particle size (Mv) of core layers dispersed in an aqueous latex and fine polymer particles dispersed in an aqueous latex was measured with use of Microtrac UPA150 (manufactured by Nikkiso Co., Ltd.). A test specimen used for measurement was prepared by diluting the aqueous latex in deionized water. When the measurement was made, the refractive index of water, the refractive index of the core layer obtained in each of Production Examples, and the refractive index of the fine polymer particles obtained in each of Production Examples were inputted, the measurement time was set to 600 seconds, and the concentration of the test specimen was adjusted such that a signal level fell within the range of 0.6 to 0.8.

<Glass transition temperature>

The Tg of each of the polymer C1, the polymer C2, and the polymer S was calculated with use of the Tg value of a homopolymer of the monomers below, according to the above FOX formula (Mathematical Formula 1).

| | |
|---|---|
| Styrene (St) | 80°C; |
| Butadiene (Bd) | -80°C; |
| n-butyl acrylate (BA) | -55°C; |
| Methyl acrylate (MA) | 8°C; |
| Methyl methacrylate (MMA) | 105°C; |
| Glycidyl methacrylate (GMA) | 46°C; |

A crosslinking monomer was used in formation of some polymers by polymerization but an amount of the crosslinking monomer used was small (in other words, an amount of a crosslinking unit in the obtained polymer was small). Thus, influence on the Tg of the polymer was small, and therefore the use of the crosslinking monomer was not taken into consideration in calculation of the Tg according to the FOX formula.

<Measurement of physical properties of epoxy cured product>

The cured product (cured plate) obtained in each of Examples and Comparative Examples was cut to obtain a test specimen. With use of the test specimen thus prepared, a bending test and a Charpy test were carried out under conditions in which an inter-fulcrum distance was 80 mm and a test speed was 2 mm/min, and thus a flexural modulus and Charpy strength were obtained.

The cured product (cured plate) obtained in each of Examples and Comparative Examples was cut into a size with a length of 2.5 inches, a width (b) of 0.5 inches, and a thickness (h) of 5 mm, and thus a test piece was obtained. In the obtained test piece, a V-notch was provided using a notching machine. Then, a crack was provided from the tip of the V-notch to the center of the test piece using a razor blade. After aging of the test piece at 23°C for 48 hours, a three-point bending test was carried out using Autograph AG-2000E (manufactured by Shimadzu Corporation) under conditions in which an inter-fulcrum distance (L) was 50 mm and a test speed was 1 mm/min. Using maximum strength F (kN) obtained in the three-point bending test, a fracture toughness value K1c (MPa·m$^{0.5}$) was calculated in accordance with Mathematical Formula 3 and Mathematical Formula 4 below. In those formulae, a is a sum of a depth of a V-notch and a length from a tip of the V-notch to a tip of a crack, and L, h, a, and b are indicated in centimeters (ASTM D5045).

$$\text{(Mathematical Formula 3): } K1c = (F \times L / (h \times b^{3/2})) \times f$$

$$(\mathrm{Mathematical\ Formula\ 4}):\ f = 3(a/b)^{1/2} \times AA/BB$$

(In Mathematical Formula 4, AA = 1.99-(a/b){1-(a/b)}{2.15-3.93(a/b)+2.7(a/b)$^2$)}, and BB = 2{1+2(a/b)}{1-(a/b)}$^{3/2}$.

<Measurement of viscosity>

The viscosity of the resin composition (master batch) obtained in each of Examples and Comparative Examples was measured. As a device, a digital viscometer DV-II+Pro manufactured by BROOKFIELD was used. Further, a spindle CPE-52 was used for some viscosity ranges. The viscosity was measured at a temperature of 50°C, while a shear rate was changed as necessary. The results are shown in Table 1.

[Preparation of fine polymer particles]

(Comparative Example 3)

<1. Formation of core layer>

(Production Example 1-1: Preparation of polybutadiene rubber latex (R-1))

Into a pressure-resistant polymerization apparatus were introduced 200 parts by mass of deionized water, 0.03 parts by mass of tripotassium phosphate, 0.002 parts by mass of disodium ethylenediaminetetraacetate (EDTA), 0.001 parts by mass of ferrous sulfate heptahydrate, and 1.55 parts by mass of sodium dodecylbenzenesulfonate (SDBS) as an emulsifying agent. Next, while the raw materials thus introduced were stirred, gas in the pressure-resistant polymerization apparatus was replaced with nitrogen, so as to sufficiently remove oxygen from the inside of the pressure-resistant polymerization apparatus. After that, 100 parts by mass of butadiene (Bd) was introduced into the pressure-resistant polymerization apparatus, and the temperature inside the pressure-resistant polymerization apparatus was raised to 45°C. After that, 0.03 parts by mass of paramenthane hydroperoxide (PHP) was introduced into the pressure-resistant polymerization apparatus, and then 0.10 parts by mass of sodium formaldehyde sulfoxylate (SFS) was introduced into the pressure-resistant polymerization apparatus. Polymerization was then started. At the time 15 hours had elapsed from the start of the polymerization, residual monomers not used in the polymerization were removed by devolatilization under reduced pressure, and the polymerization was ended. During the polymerization, PHP, EDTA, and ferrous sulfate heptahydrate were each added to the pressure-resistant polymerization apparatus in discretionarily selected amounts and at discretionarily selected points in time. By the polymerization, a polybutadiene rubber latex (R-1), which contained polybutadiene rubber as a main component, was obtained. The volume-average particle size of the polybutadiene rubber contained in the obtained polybutadiene rubber latex (R-1) was 0.08 μm.

(Production Example 1-2: Preparation of polybutadiene rubber latex (R-2))

Into a pressure-resistant polymerization apparatus were introduced 21 parts by mass of the polybutadiene rubber latex (R-1) obtained in Production Example 1-1 (containing 7 parts by mass of the polybutadiene rubber), 185 parts by mass of deionized water, 0.03 parts by mass of tripotassium phosphate, 0.002 parts by mass of EDTA, and 0.001 parts by mass of ferrous sulfate heptahydrate. Next, while the raw materials thus introduced were stirred, gas in the pressure-resistant polymerization apparatus was replaced with nitrogen, so as to sufficiently remove oxygen from the inside of the pressure-resistant polymerization apparatus. After that, 93 parts by mass of Bd was introduced into the pressure-resistant polymerization apparatus, and the temperature inside the pressure-resistant polymerization apparatus was raised to 45°C. After that, 0.02 parts by mass of PHP was introduced into the pressure-resistant polymerization apparatus, and then 0.10 parts by mass of SFS was introduced into the pressure-resistant polymerization apparatus. Polymerization was then started. At the time 30 hours had elapsed from the start of the polymerization, residual monomers not used in the polymerization were removed by devolatilization under reduced pressure, and the polymerization was ended. During the polymerization, PHP, EDTA, ferrous sulfate heptahydrate, and SDBS were each added to the pressure-resistant polymerization apparatus in discretionarily selected amounts and at discretionarily selected points in time. By the polymerization, a polybutadiene rubber latex (R-2), which contained a core layer containing polybutadiene rubber as a main component, was obtained. The volume-average particle size of the core layer contained in the obtained polybutadiene rubber latex (R-2) was 0.20 μm. The Tg of the polybutadiene rubber contained in the polybutadiene rubber latex (R-2) was -80°C. Therefore, in Table 1, although the Tg of Comparative Example 3 is indicated in the column of "polymer C1", the core layer of the fine polymer particles of Comparative Example 3 does not contain the polymer C1.

<2. Preparation of fine polymer particles (formation of shell layer)>

(Production Example 2-2: Preparation of aqueous latex (L-2) containing fine polymer particles)

Into a glass reaction vessel were introduced 261 parts by mass of the polybutadiene rubber latex (R-2) obtained in Production Example 1-1 (including 87 parts by mass of the polybutadiene rubber particles) and 54 parts by mass of deionized water. The glass reaction vessel had a thermometer, a stirrer, a reflux condenser, a nitrogen inlet, and a monomer adding device. The raw materials thus introduced were stirred at 60°C while gas in the glass reaction vessel was replaced with nitrogen. Next, 0.004 parts by mass of EDTA, 0.001 parts by mass of ferrous sulfate heptahydrate, and 0.2 parts by mass of SFS were added to the glass reaction vessel. After that, a mixture of 13 parts by mass of methyl methacrylate (MMA) and 0.04 parts by mass of CHP was added continuously to the glass reaction vessel over 85 minutes. After the end of addition, 0.065 parts by mass of CHP was added to the glass reaction vessel, and a resultant mixture in the glass reaction vessel was stirred for another hour so as to complete polymerization. Through the above operations was obtained an aqueous latex (L-2) containing the fine polymer particles. Not less than 99% of the monomer component had been polymerized. The volume-average particle size of the fine polymer particles contained in the obtained aqueous latex (L-2) was 0.19 $\mu$m.

(Comparative Example 2)

<1. Formation of core layer>

(Production Example 1-3: Preparation of aqueous latex (R-3))

Into a glass reaction vessel were introduced 182 parts by mass of deionized water, 0.006 parts by mass of EDTA, 0.0015 parts by mass of ferrous sulfate heptahydrate, 0.2 parts by mass of SFS, and 0.15 parts by mass of SDBS. The glass reaction vessel had a thermometer, a stirrer, a reflux condenser, a nitrogen inlet, and a monomer and emulsifying agent adding device. The raw materials thus introduced were stirred at 60°C while gas in the glass reaction vessel was replaced with nitrogen (i.e., in a nitrogen gas stream). After that, a mixture of 75 parts by mass of St, 1.5 parts by mass of allyl methacrylate (ALMA), and 0.021 parts by mass of cumene hydroperoxide (CHP) was added continuously in the form of droplets to the glass reaction vessel over 175 minutes. After the end of addition, a resultant mixture in the glass reaction vessel was stirred for another 0.5 hours so as to complete polymerization. Through the above operations was obtained an aqueous latex (R-3) containing the polymer C1. The Tg of the polymer C1 is shown in Table 1.

<2. Preparation of fine polymer particles (formation of shell layer)>

(Production Example 2-3: Preparation of aqueous latex (L-1) containing fine polymer particles)

Subsequent to the formation of the core layer, a mixture of (i) a mixture containing monomers in respective amounts indicated in the column of the shell layer in Table 1 (i.e., a mixture of 22.5 parts by mass of methyl methacrylate (MMA), 0.5 parts by mass of butyl acrylate (BA), and 2 parts by mass of glycidyl methacrylate (GMA)) and (ii) 0.05 parts by mass of CHP was added continuously to the glass reaction vessel (containing the aqueous latex (R-3)) after the production of the aqueous latex (R-3) over 200 minutes. After the end of addition, 0.04 parts by mass of CHP was added to the glass reaction vessel, and a resultant mixture in the glass reaction vessel was stirred for another hour so as to complete polymerization. Through the above operations, a shell layer grafted to the crosslinked core layer was formed, and an aqueous latex (L-1) containing the fine polymer particles was obtained. Not less than 99% of the monomer component had been polymerized. The volume-average particle size of the fine polymer particles contained in the obtained aqueous latex (L-1) was 0.19 $\mu$m. The Tg of the shell layer of the fine polymer particles of Comparative Example 2 contained in the aqueous latex (L-1) was 94°C. In Table 1, the Tg of Comparative Example 2 is indicated in the column of "polymer S". However, the shell layer of the fine polymer particles of Comparative Example 2 does not contain the polymer S.

(Example 1)

(Preparation of fine polymer particle latex (L-3))

An aqueous latex (L-3) containing the fine polymer particles was obtained with a method identical with that in Production Example 2-3, except that a mixture containing monomers in respective amounts indicated in the column of the shell layer in Table 1 was used in Production Example 2-3. Not less than 99% of the monomers had been polymerized. The volume-average particle size of the fine polymer particles contained in the obtained aqueous latex was 0.19 $\mu$m.

(Example 2)

(Preparation of fine polymer particle latex (L-4))

An aqueous latex (L-4) containing the fine polymer particles was obtained with a method identical with that in Production Example 2-3, except that a mixture containing monomers in respective amounts indicated in the column of the shell layer in Table 1 was used in Production Example 2-3. Not less than 99% of the monomers had been polymerized. The volume-average particle size of the fine polymer particles contained in the obtained aqueous latex was 0.19 μm.

In Examples 1 and 2, the core layer of the fine polymer particles was a crosslinked core layer constituted only by the crosslinked polymer C1. Moreover, in Examples 1 and 2, the shell layer of the fine polymer particles was non-crosslinked, and was constituted only by the polymer S having a Tg of 0°C or lower.

(Example 3)

(Preparation of fine polymer particle latex (L-5))

Into a glass reaction vessel were introduced 182 parts by mass of deionized water, 0.006 parts by mass of EDTA, 0.0015 parts by mass of ferrous sulfate heptahydrate, 0.2 parts by mass of SFS, and 0.15 parts by mass of SDBS. The glass reaction vessel had a thermometer, a stirrer, a reflux condenser, a nitrogen inlet, and a monomer and emulsifying agent adding device. The raw materials thus introduced were stirred at 60°C while gas in the glass reaction vessel was replaced with nitrogen (i.e., in a nitrogen gas stream). After that, a mixture of 55 parts by mass of St, 1.1 parts by mass of allyl methacrylate (ALMA), and 0.015 parts by mass of cumene hydroperoxide (CHP) was added continuously in the form of droplets to the glass reaction vessel over 130 minutes. After the end of addition, a resultant mixture in the glass reaction vessel was stirred for another 0.5 hours so as to complete polymerization. Through the above operations was obtained a first core layer (polymer C1). Subsequently, a mixture of 20 parts by mass of BA, 0.4 parts by mass of allyl methacrylate (ALMA), and 0.006 parts by mass of cumene hydroperoxide (CHP) was added continuously in the form of droplets to the glass reaction vessel over 50 minutes. After the end of addition, a resultant mixture in the glass reaction vessel was stirred for another 0.5 hours so as to complete polymerization. Through the above operations was obtained an aqueous latex including a crosslinked core layer in which a second core layer (polymer C2) was formed on the outer side of the first core layer (polymer C1). Subsequently, a mixture of (i) a mixture containing monomers in respective amounts indicated in the column of the shell layer in Table 1 (i.e., a mixture of 12.5 parts by mass of methyl acrylate (MA), 10.5 parts by mass of butyl acrylate (BA), and 2 parts by mass of GMA) and (ii) 0.05 parts by mass of CHP was added continuously to the glass reaction vessel over 200 minutes. After the end of addition, 0.04 parts by mass of CHP was added to the glass reaction vessel, and a resultant mixture in the glass reaction vessel was stirred for another hour so as to complete polymerization. Through the above operations, a shell layer grafted to the crosslinked core layer was formed, and an aqueous latex (L-5) containing the fine polymer particles was obtained. Not less than 99% of the monomer component had been polymerized. The volume-average particle size of the fine polymer particles contained in the obtained aqueous latex was 0.22 μm.

(Example 4)

(Production Example 2-4: Preparation of fine polymer particle latex (L-6))

Into a glass reaction vessel were introduced 182 parts by mass of deionized water, 0.006 parts by mass of EDTA, 0.0015 parts by mass of ferrous sulfate heptahydrate, 0.2 parts by mass of SFS, and 0.15 parts by mass of SDBS. The glass reaction vessel had a thermometer, a stirrer, a reflux condenser, a nitrogen inlet, and a monomer and emulsifying agent adding device. The raw materials thus introduced were stirred at 60°C while gas in the glass reaction vessel was replaced with nitrogen (i.e., in a nitrogen gas stream). After that, a mixture of 55 parts by mass of St, 1.1 parts by mass of allyl methacrylate (ALMA), and 0.015 parts by mass of cumene hydroperoxide (CHP) was added continuously in the form of droplets to the glass reaction vessel over 130 minutes. After the end of addition, a resultant mixture in the glass reaction vessel was stirred for another 0.5 hours so as to complete polymerization. Through the above operations was obtained a first core layer (polymer C1). Subsequently, a mixture of (i) a mixture containing monomers in respective amounts indicated in the column of the polymer C2 of the core layer in Table 1 (i.e., a mixture of 14.4 parts by weight of BA and 5.6 parts by weight of MA), (ii) 0.4 parts by mass of allyl methacrylate (ALMA), and (iii) 0.006 parts by mass of cumene hydroperoxide (CHP) was dripped continuously to the glass reaction vessel over 50 minutes. After the end of addition, a resultant mixture in the glass reaction vessel was stirred for another 0.5 hours so as to complete polymerization. Through the above operations was obtained an aqueous latex including a crosslinked core layer in which a second core layer (polymer C2) was formed on the outer side of the first core layer (polymer C1). Subsequently, a mixture of (i) a mixture containing monomers in respective amounts indicated in the column of the shell layer in Table 1 (i.e., a mixture of 12.5 parts by mass of MA, 10.5 parts by mass of BA, and 2 parts by mass of GMA) and (ii) 0.05 parts by mass of CHP was added continuously to the glass reaction vessel over 200 minutes. After the end of addition, 0.04 parts by mass of CHP was added to the glass reaction vessel, and a resultant mixture in the glass reaction vessel was stirred for another hour so as to complete polymerization. Through the above operations, a shell layer grafted to the crosslinked core layer was formed, and an aqueous latex (L-6) containing the fine polymer particles was obtained. Not less than 99% of the monomer component had been polymerized. The volume-average particle size of the fine polymer particles contained in the obtained aqueous latex was 0.22 μm.

(Example 5)

(Preparation of fine polymer particle latex (L-7))

An aqueous latex (L-7) containing the fine polymer particles was obtained with a method identical with that in Production Example 2-4, except that a mixture containing monomers in respective amounts indicated in the column of the polymer C2 of the core layer in Table 1 was used and a mixture containing monomers in respective amounts indicated in the column of the shell layer in Table 1 was used in Production Example 2-4. Not less than 99% of the monomer component had been polymerized. The volume-average particle size of the fine polymer particles contained in the obtained aqueous latex was 0.22 μm.

(Example 6)

(Preparation of fine polymer particle latex (L-8))

An aqueous latex (L-8) containing the fine polymer particles was obtained with a method identical with that in Production Example 2-4, except that a mixture containing monomers in respective amounts indicated in the column of the polymer C2 of the core layer in Table 1 was used and a mixture containing monomers in respective amounts indicated in the column of the shell layer in Table 1 was used in Production Example 2-4. Not less than 99% of the monomer component had been polymerized. The volume-average particle size of the fine polymer particles contained in the obtained aqueous latex was 0.22 μm.

(Example 7)

(Preparation of fine polymer particle latex (L-9))

Into a glass reaction vessel were introduced 182 parts by mass of deionized water, 0.006 parts by mass of EDTA, 0.0015 parts by mass of ferrous sulfate heptahydrate, 0.2 parts by mass of SFS, and 0.15 parts by mass of SDBS. The glass reaction vessel had a thermometer, a stirrer, a reflux condenser, a nitrogen inlet, and a monomer and emulsifying agent adding device. The raw materials thus introduced were stirred at 60°C while gas in the glass reaction vessel was replaced with nitrogen (i.e., in a nitrogen gas stream). After that, a mixture of 65 parts by mass of St, 1.3 parts by mass of allyl methacrylate (ALMA), and 0.018 parts by mass of cumene hydroperoxide (CHP) was added continuously in the form of droplets to the glass reaction vessel over 150 minutes. After the end of addition, a resultant mixture in the glass reaction vessel was stirred for another 0.5 hours so as to complete polymerization. Through the above operations was obtained a first core layer (polymer C1). Subsequently, a mixture of (i) a mixture containing monomers in respective amounts indicated in the column of the polymer C2 of the core layer in Table 1 (i.e., a mixture of 5.4 parts by weight of BA and 4.6 parts by weight of MA), (ii) 0.2 parts by mass of allyl methacrylate (ALMA), and (iii) 0.003 parts by mass of cumene hydroperoxide (CHP) was dripped continuously to the glass reaction vessel over 25 minutes. After the end of addition, a resultant mixture in the glass reaction vessel was stirred for another 0.5 hours so as to complete polymerization. Through the above operations was obtained an aqueous latex including a crosslinked core layer in which a second core layer (polymer C2) was formed on the outer side of the first core layer (polymer C1). Subsequently, a mixture of (i) a mixture containing monomers in respective amounts indicated in the column of the shell layer in Table 1 (i.e., a mixture of 12.5 parts by mass of MA, 10.5 parts by mass of BA, and 2 parts by mass of GMA) and (ii) 0.05 parts by mass of CHP was added continuously to the glass reaction vessel over 200 minutes. After the end of addition, 0.04 parts by mass of CHP was added to the glass reaction vessel, and a resultant mixture in the glass reaction vessel was stirred for another hour so as to complete polymerization. Through the above operations, a shell layer grafted to the crosslinked core layer was formed, and an aqueous latex (L-9) containing the fine polymer particles was obtained. Not less than 99% of the monomer component had been polymerized. The volume-average particle size of the fine polymer particles contained in the obtained aqueous latex was 0.21 μm.

In Examples 3 through 7, the core layer of the fine polymer particles was a crosslinked core layer constituted only by the polymer C1 which was crosslinked and had a Tg of 70°C or higher and the polymer C2 which was formed on the outer side of the polymer C1, was crosslinked, and had a Tg of 0°C or lower. Moreover, in Examples 3 through 7, the shell layer of the fine polymer particles was non-crosslinked, and was constituted only by the polymer S having a Tg of 0°C or lower.

[Preparation of resin composition (master batch)]

(Examples 1 through 7 and Comparative Examples 2 and 3)

To a 1L mixing vessel at 25°C, 132 g of methyl ethyl ketone (MEK) was introduced. While stirring MEK, 132 g of each of the aqueous latexes (L-1) through (L-9) (corresponding to 40 g of the fine polymer particles) of the fine polymer particles obtained in Examples and Comparative Examples was introduced. After uniform mixing, 200 g of water was introduced at a feed rate of 80 g/min. After the feeding, the stirring was promptly stopped, and a slurry that was constituted by an aqueous phase containing a buoyant agglutinate and a part of an organic solvent was obtained. Next, 360 g of the aqueous phase was let out from an outlet in a lower part of the vessel so that the agglutinate containing a part of the aqueous phase remained. To the obtained agglutinate, 90 g of MEK was added and a resultant mixture was uniformly mixed. Thus, a dispersion liquid in which the fine polymer particles were dispersed uniformly was obtained. The dispersion liquid was mixed with 120 g of an epoxy resin (JER828EL manufactured by Mitsubishi Chemical Corporation), which is a matrix resin. The MEK was removed from the mixture with use of a rotary evaporator. Thus, a resin composition (master batch) containing the fine polymer particles and the epoxy resin was obtained. The viscosity of the obtained resin composition (master batch) was measured. The results are shown in Table 1.

[Preparation of cured product (cured plate)]

(Comparative Example 1)

In Comparative Example 1, fine polymer particles were not prepared, and the resin composition (master batch) was not adjusted. That is, in Comparative Example 1, 25 parts by weight of "JER WA" (product name, manufactured by Mitsubishi Chemical Corporation) as a curing agent was added to 100 parts by weight of an epoxy resin (jER828 manufactured by Mitsubishi Chemical Corporation), and thus a mixture was obtained. The obtained mixture was mixed for 5 minutes with use of a planetary centrifugal mixer at 2000 rpm, and thus a resin composition was obtained. The obtained resin composition was poured into a mold frame and heated at 100°C for 2 hours and at 175°C for 4 hours to obtain a cured product (cured plate). The physical properties of the obtained cured plate were measured. The results are shown in Table 1.

(Examples 1 through 7 and Comparative Examples 2 and 3)

To 80.26 parts by weight of an epoxy resin (jER828 manufactured by Mitsubishi Chemical Corporation), 25 parts by weight of "JER WA" (product name, manufactured by Mitsubishi Chemical Corporation) as a curing agent and 26.32 parts by weight of the resin composition (master batch) obtained in each of Examples and Comparative Examples were added, and thus a mixture was obtained. The obtained mixture was mixed for 5 minutes with use of a planetary centrifugal mixer at 2000 rpm, and thus a resin composition was obtained. The obtained resin composition was poured into a mold frame and heated at 100°C for 2 hours and at 175°C for 4 hours to obtain a cured product (cured plate). The physical properties of the obtained cured plate were measured. The results are shown in Table 1.

[Table 1]

| | | | | | Example 1 | Example 2 | Example 3 |
|---|---|---|---|---|---|---|---|
| Composition | Core layer | Polymer C1 | St | parts by weight | 75 | 75 | 55 |
| | | | Bd | parts by weight | - | - | - |
| | | Polymer C2 | BA | parts by weight | - | - | 20 |
| | | | MA | parts by weight | | | - |
| | Shell layer | Polymer S | BA | parts by weight | 14.5 | 10.5 | 10.5 |
| | | | MA | parts by weight | 8.5 | 12.5 | 12.5 |
| | | | MMA | parts by weight | - | - | - |
| | | | GMA | parts by weight | 2 | 2 | 2 |

(continued)

|  |  |  |  | Example 1 | Example 2 | Example 3 |
|---|---|---|---|---|---|---|
| Glass transition temperature | Core layer | Polymer C1 | °C | 80°C | 80°C | 80°C |
|  |  | Polymer C2 | °C | - | - | -55°C |
|  | Shell layer | Polymer S | °C | -30°C | -20°C | -20°C |
| Physical properties | Cured product | Flexural modulus | Gpa | 2.43 | 2.42 | 2.28 |
|  |  | Charpy strength | kJ/m$^2$ | 27.3 | 30.6 | 26.7 |
|  |  | K1c | MPa×m$^{0.5}$ | 0.76 | 0.77 | 0.77 |
|  | Resin composition | Viscosity | cps | 3,493 | 3,969 | 4,440 |

|  |  |  |  |  | Example 4 | Example 5 | Example 6 | Example 7 |
|---|---|---|---|---|---|---|---|---|
| Composition | Core layer | Polymer C1 | St | parts by weight | 55 | 55 | 55 | 65 |
|  |  |  | Bd | parts by weight | - | - | - | - |
|  |  | Polymer C2 | BA | parts by weight | 14.4 | 10.8 | 7.6 | 5.4 |
|  |  |  | MA | parts by weight | 5.6 | 9.2 | 12.4 | 4.6 |
|  | Shell layer | Polymer S | BA | parts by weight | 10.5 | 10.5 | 10.5 | 10.5 |
|  |  |  | MA | parts by weight | 12.5 | 12.5 | 12.5 | 12.5 |
|  |  |  | MMA | parts by weight | - | - | - | - |
|  |  |  | GMA | parts by weight | 2 | 2 | 2 | 2 |
| Glass transition temperature | Core layer | Polymer C1 | °C |  | 80°C | 80°C | 80°C | 80°C |
|  |  | Polymer C2 | °C |  | -40°C | -30°C | -20°C | -30°C |
|  | Shell layer | Polymer S | °C |  | -20°C | -20°C | -20°C | -20°C |
| Physical properties | Cured product | Flexural modulus | Gpa |  | 2.32 | 2.35 | 2.34 | 2.4 |
|  |  | Charpy strength | kJ/m$^2$ |  | 31.6 | 34 | 33 | 28.5 |
|  |  | K1c | MPa×m$^{0.5}$ |  | 0.77 | 0.77 | 0.77 | 0.77 |
|  | Resin composition | Viscosity | cps |  | 4,755 | 4,421 | 4,814 | 3,497 |

| | | | | | Comparative Example 1 | Comparative Example 2 | Comparative Example 3 |
|---|---|---|---|---|---|---|---|
| Composition | Core layer | Polymer C1 | St | parts by weight | Fine polymer particles were not added | 75 | - |
| | | | Bd | parts by weight | | - | 87 |
| | | Polymer C2 | BA | parts by weight | | - | - |
| | | | MA | parts by weight | | | |
| | Shell layer | Polymer S | BA | parts by weight | | 0.5 | - |
| | | | MA | parts by weight | | - | - |
| | | | MMA | parts by weight | | 22.5 | 13 |
| | | | GMA | parts by weight | | 2 | - |
| Glass transition temperature | Core layer | Polymer C1 | | °C | | 80°C | -80°C |
| | | Polymer C2 | | °C | | - | - |
| | Shell layer | Polymer S | | °C | | 94°C | 105°C |
| Physical properties | Cured product | Flexural modulus | | Gpa | 2.37 | 2.46 | 2.14 |
| | | Charpy strength | | kJ/m$^2$ | 17.3 | 20.7 | 25.3 |
| | | K1c | | MPa×m$^{0.5}$ | 0.64 | 0.74 | 0.74 |
| | Resin composition | Viscosity | | cps | - | 18,891 | 10,000 |

Industrial Applicability

According to an aspect of the present invention, it is possible to provide fine polymer particles that can provide a resin composition which can provide a cured product which is excellent in elastic modulus and impact resistance. Therefore, an embodiment of the present invention is preferably used in applications such as, for example, adhesive agents, coating materials, binders for reinforcement fibers, composite materials, molding materials for 3D printers, sealants, electronic substrates, ink binders, wood chip binders, binders for rubber chips, foam chip binders, binders for castings, rock mass consolidation materials for floor materials and ceramics, and urethane foams. An embodiment of the present invention is preferably used in a composite material that is used, in particular, in production of an aircraft and the like.

Claims

1.    Fine polymer particles comprising a graft copolymer that includes a crosslinked core layer and a shell layer grafted to the crosslinked core layer,

the crosslinked core layer containing a polymer C1 having a glass transition temperature of 75°C or higher,
the shell layer containing a polymer S having a glass transition temperature of 0°C or lower, and
said fine polymer particles having a volume-average particle size of 0.01 μm to 1.00 μm.

2.    The fine polymer particles as set forth in claim 1, wherein:
the polymer C1 contains 50% by weight to 100% by weight of a structural unit U1, which is derived from a monomer M1, in 100% by weight of the polymer C1, the monomer M1, when used to form a homopolymer, providing a homopolymer having a glass transition temperature of 60°C or higher.

3. The fine polymer particles as set forth in claim 1, wherein:
the polymer S contains at least one structural unit selected from the group consisting of an aromatic vinyl unit, a vinyl cyanide unit, and a (meth)acrylate-based unit.

4. The fine polymer particles as set forth in claim 1, wherein:
the crosslinked core layer includes a first crosslinked core layer and a second crosslinked core layer which is formed on the outer side of the first crosslinked core layer.

5. The fine polymer particles as set forth in claim 4, wherein:

the first crosslinked core layer contains the polymer C 1; and
the second crosslinked core layer contains a polymer C2 having a glass transition temperature of 0°C or lower.

6. The fine polymer particles as set forth in claim 1, wherein:
the shell layer contains an epoxy group-containing structural unit in an amount of more than 0% by weight and not more than 50% by weight in 100% by weight of the shell layer.

7. The fine polymer particles as set forth in claim 1, wherein:
the polymer C1 contains (i) at least one structural unit selected from the group consisting of a styrene unit, an $\alpha$-methylstyrene unit, a phenyl methacrylate unit, an isobornyl methacrylate unit, and a dicyclopentanyl methacrylate unit and (ii) at least one structural unit selected from the group consisting of an allyl methacrylate unit, a diallyl phthalate unit, a triallyl isocyanurate unit, and a divinylbenzene unit.

8. The fine polymer particles as set forth in claim 5, wherein:
the polymer C2 contains (i) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (ii) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, $\alpha$-methylstyrene, p-methylstyrene, acrylonitrile, and methacrylonitrile, and (iii) at least one structural unit selected from the group consisting of allyl methacrylate, diallyl phthalate, triallyl isocyanurate, and divinylbenzene.

9. The fine polymer particles as set forth in claim 1, wherein:
the polymer S contains (i) at least one structural unit selected from the group consisting of an ethyl acrylate unit, a butyl acrylate unit, a 2-ethylhexyl acrylate unit, an octyl (meth)acrylate unit, a dodecyl (meth)acrylate unit, a 2-hydroxyethyl acrylate unit, and a 4-hydroxybutyl acrylate unit, (ii) at least one structural unit selected from the group consisting of methyl (meth)acrylate, ethyl methacrylate, butyl methacrylate, 2-ethylhexyl methacrylate, octyl (meth)acrylate, dodecyl (meth)acrylate, stearyl (meth)acrylate, phenoxyethyl (meth)acrylate, benzyl (meth)acrylate, styrene, $\alpha$-methylstyrene, p-methylstyrene, acrylonitrile, and methacrylonitrile, and (iii) at least one structural unit selected from the group consisting of glycidyl (meth)acrylate, 4-hydroxybutyl (meth)acrylate glycidyl ether, and allyl glycidyl ether.

10. A resin modifier containing fine polymer particles recited in claim 1.

11. A resin composition comprising:

fine polymer particles recited in any one of claims 1 through 10 or a resin modifier recited in claim 8; and
a matrix resin,
an amount of the fine polymer particles being 15% by weight to 50% by weight and an amount of the matrix resin being 50% by weight to 85% by weight with respect to a total of 100% by weight of the fine polymer particles and the matrix resin.

12. The resin composition as set forth in claim 11, wherein:
the matrix resin is a thermosetting resin.

13. The resin composition as set forth in claim 11, wherein: the matrix resin is an epoxy resin.

**14.** The resin composition as set forth in claim 11, wherein:

the amount of the fine polymer particles is 20% by weight to 50% by weight with respect to the total of 100% by weight of the fine polymer particles and the matrix resin; and
said resin composition has a viscosity at 50°C of 8,000 mPa·s or less.

**15.** A composite material comprising a resin composition recited in claim 11.

## INTERNATIONAL SEARCH REPORT

| International application No. |
| --- |
| **PCT/JP2024/011562** |

| A. | CLASSIFICATION OF SUBJECT MATTER |
| --- | --- |

*C08F 265/02*(2006.01)i; *C08L 51/06*(2006.01)i
FI: C08F265/02; C08L51/06

According to International Patent Classification (IPC) or to both national classification and IPC

| B. | FIELDS SEARCHED |
| --- | --- |

Minimum documentation searched (classification system followed by classification symbols)

C08F265/02; C08L51/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 7-10937 A (KURARAY CO., LTD.) 13 January 1995 (1995-01-13) claims, paragraph [0038], examples | 1-4, 7, 9-15 |
| X | JP 2008-520775 A (MERCK PATENT GMBH) 19 June 2008 (2008-06-19) claims, paragraph [0065], examples | 1-4, 7, 9 |
| A | WO 2010/090246 A1 (MITSUBISHI RAYON CO., LTD.) 12 August 2010 (2010-08-12) entire text | 1-15 |
| A | JP 2005-503460 A (MERCK PATENT GMBH) 03 February 2005 (2005-02-03) entire text | 1-15 |
| A | JP 11-505871 A (IMPERIAL CHEMICAL INDUSTRIES, PLC) 25 May 1999 (1999-05-25) entire text | 1-15 |
| A | JP 61-293213 A (ROHM AND HAAS COMPANY) 24 December 1986 (1986-12-24) entire text | 1-15 |

☐ Further documents are listed in the continuation of Box C.    ☑ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **21 May 2024** | **04 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/011562**

| Patent document cited in search report | | | Publication date (day/month/year) | Patent family member(s) | | | Publication date (day/month/year) |
|---|---|---|---|---|---|---|---|
| JP | 7-10937 | A | 13 January 1995 | (Family: none) | | | |
| JP | 2008-520775 | A | 19 June 2008 | WO | 2006/053640 | A1 | |
| | | | | claims, p. 19, lines 12-32, examples | | | |
| | | | | EP | 1812484 | A1 | |
| | | | | DE | 102004055303 | A1 | |
| | | | | CA | 2587477 | A1 | |
| | | | | KR | 10-2007-0089129 | A | |
| | | | | CN | 101090920 | A | |
| | | | | AT | 416206 | T | |
| | | | | BR | PI0518335 | A | |
| | | | | MX | 2007005911 | A | |
| | | | | RU | 2007122279 | A | |
| | | | | TW | 200631967 | A | |
| WO | 2010/090246 | A1 | 12 August 2010 | US | 2011/0294954 | A1 | |
| | | | | entire text | | | |
| | | | | EP | 2395032 | A1 | |
| | | | | CN | 102307918 | A | |
| | | | | KR | 10-2011-0122164 | A | |
| | | | | TW | 201035133 | A | |
| JP | 2005-503460 | A | 03 February 2005 | US | 2004/0253443 | A1 | |
| | | | | entire text | | | |
| | | | | WO | 2003/025035 | A2 | |
| | | | | EP | 1469020 | A1 | |
| | | | | DE | 10228228 | A | |
| | | | | CA | 2459749 | A1 | |
| | | | | BR | 212478 | A | |
| | | | | TW | 262194 | B | |
| | | | | CN | 1553925 | A | |
| | | | | KR | 10-2004-0031788 | A | |
| | | | | AT | 446325 | T | |
| | | | | MX | PA04002266 | A | |
| JP | 11-505871 | A | 25 May 1999 | US | 6172135 | B1 | |
| | | | | entire text | | | |
| | | | | WO | 1996/037531 | A1 | |
| | | | | EP | 745622 | A1 | |
| | | | | CA | 2220411 | A1 | |
| | | | | ES | 2145453 | T | |
| | | | | PT | 828772 | E | |
| | | | | DK | 828772 | T | |
| | | | | TW | 442502 | B | |
| | | | | CN | 1185165 | A | |
| | | | | MY | 134601 | A | |
| JP | 61-293213 | A | 24 December 1986 | US | 4677003 | A | |
| | | | | entire text | | | |
| | | | | EP | 203724 | A2 | |
| | | | | DE | 3681825 | A | |
| | | | | MX | 169002 | B | |
| | | | | NZ | 215946 | A | |
| | | | | PH | 22987 | A | |
| | | | | BR | 8601895 | A | |

Form PCT/ISA/210 (patent family annex) (July 2022)

## INTERNATIONAL SEARCH REPORT
### Information on patent family members

International application No.

**PCT/JP2024/011562**

| Patent document<br>cited in search report | Publication date<br>(day/month/year) | Patent family member(s) | | Publication date<br>(day/month/year) |
|---|---|---|---|---|
| | | CA | 1285092 C | |
| | | IL | 78606 A | |
| | | SG | 7692 G | |
| | | KR 10-1986-0008212 | A | |
| | | CN | 86103126 A | |
| | | AU | 5651686 A | |
| | | AT | 68190 E | |
| | | IL | 78606 A0 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019189621 A
- JP 2015182248 A

- WO 2005028546 A

**Non-patent literature cited in the description**

- Polymer Handbook. John Wiley & Sons, Inc.